(19) Europäisches Patentamt / European Patent Office / Office européen des brevets

(11) **EP 4 376 426 A1**

(12) **EUROPEAN PATENT APPLICATION**

(43) Date of publication:
**29.05.2024 Bulletin 2024/22**

(21) Application number: **22306739.8**

(22) Date of filing: **25.11.2022**

(51) International Patent Classification (IPC):
**H04N 21/854** (2011.01)  **H04N 21/84** (2011.01)
**H04N 21/414** (2011.01)  **H04N 21/4402** (2011.01)
**H04N 21/236** (2011.01)

(52) Cooperative Patent Classification (CPC):
**H04N 21/85406; H04N 21/23614; H04N 21/41407;
H04N 21/440245; H04N 21/440272;
H04N 21/44029; H04N 21/84**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.**
**Beijing 100085 (CN)**

(72) Inventors:
• **THOMAS, EMMANUEL**
  **2611WD Delft (NL)**
• **Potetsianakis, Emmanouil**
  **2563 TZ The Hague (NL)**

(74) Representative: **RVDB Rennes**
  **44 rue Lariboisière**
  **35235 Thorigné-Fouillard (FR)**

(54) **SIGNALING ENCAPSULATED DATA REPRESENTING ALIGNMENT AXES OF A VIDEO**

(57) The present application relates to a method and apparatus of signaling encapsulated data representing image data of an image, the method comprising :
- writing (110) image data of an image as encapsulated data; and
- writing (130) data representing at least one target alignment axis of the image as encapsulated data, each target alignment axis indicating a vertical or horizontal axis of the image used by a media player to display the image once said image has been aligned in such a way that a distance between a horizontal or vertical axis of a displaying surface and said target alignment axis is minimized in the limit of displaying the aligned image over the full displaying surface.

EP 4 376 426 A1

**Fig. 12**

**Description**

<u>FIELD</u>

The present application generally relates to signaling encapsulated data representing video frames. Particularly, but not exclusively, the present application concerns signaling encapsulated data representing video frames or still images and at least one target alignment axis of said video frames or still images.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

A pixel corresponds to the smallest display unit on a screen, which can be composed of one or more sources of light (1 for monochrome screen or 3 or more for colour screens).

An image may be a video frame belonging to a video, i.e. a temporal sequence of video frames. A temporal relationship exists between the video frames of a video.

An image may also be a still image.

An image comprises at least one component (also called channel) determined by a specific picture/video format which specifies all information relative to samples values and all information which may be used by a display unit and/or any other device to display and/or to decode image data related to said image in order to generate pixel values.

An image comprises at least one component usually expressed in the shape of an 2D array of samples.

A monochrome image comprises a single component and a color image (also denoted texture image) may comprise three components.

For example, a color image may comprise a luma (or luminance) component and two chroma components when the image/video format is the well-known (Y,Cb,Cr) format or may comprise three color components (one for Red, one for Green and one for Blue) when the image/video format is the well-known (R,G,B) format.

Each component of an image may comprise a number of samples relative to a number of pixels of a display screen on which the image is intended to be displayed. For instance, the number of samples comprised in a component may be the same as, or a multiple (or fraction) of, a number of pixels of a displaying surface on which the image is intended to be displayed.

The number of samples comprised in a component may also be a multiple (or fraction) of a number of samples comprised in another component of a same image.

For example, in the case of a image/video format comprising a luma component and two chroma components like the (Y,Cb,Cr) format, dependent on the color format considered, the chroma component may contain half the number of samples in width and/or height, relative to the luma component.

A sample is the smallest visual information unit of a component composing an image. A sample value may be, for example a luma or chroma value or a colour value of the red, green or blue component of a (R, G, B) format.

A pixel value of a displaying surface may be represented by one sample for monochrome image and by multiple co-located samples for color image. Co-located samples associated with a pixel mean samples corresponding to the location of a pixel in the display screen.

It is common to consider an image as being a set of pixel values, each pixel being represented by at least one sample.

Since the beginning of digital display, the trend has been to enlarge the displaying surface of a display screen and increase the number of pixel density of that surface. In terms of aspect ratio, 4:3 was the dominant aspect ratio in TV and computer screen but today 16:9 and 16:10 represent the vast majority of screen resolutions.

In addition to those aspect ratio diversity, still image/video devices may have different orientations, namely horizontal or vertical. That is the longer dimension of the device being oriented vertically or horizontally.

Horizontal and vertical orientations are common for handheld devices such as smartphones or tablets as the end-user can change any time from both positions.

Recently, some TV set manufactures also introduced TV sets oriented in the vertical position or allowing to be vertically rotated in order to embrace the vertical image orientation predominantly seen on social media.

Traditional TV broadcast relies on TV sets being oriented in the horizontal axis. The standardised image/video formats have thus followed the trend in TV sets resolution increase as well as aspect ratio evolution, namely the transition from 4:3 to 16:9.

The streaming platform YouTube™ was primarily designed for computer and then extended for TV consumption.

As a result, the expected image/video formats were predominantly horizontal. However, the advent of image/video watching on smartphones lead to the increase of vertical image/video production. Therefore, the YouTube™ application on smartphones does render vertical image/video.

Consequently, image and displaying surface of display screen formats may mismatch.

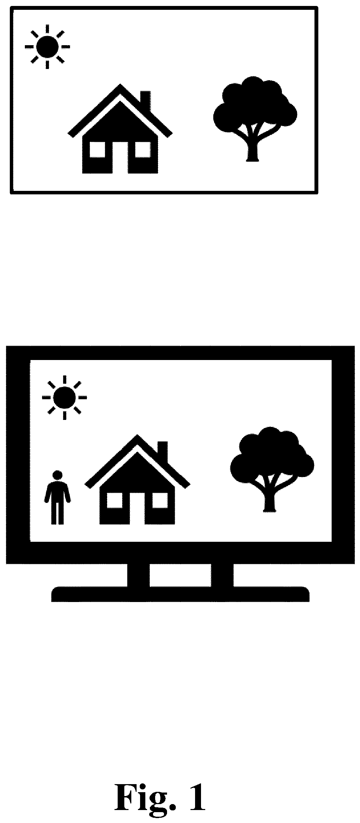

In the ideal case, the video and the displaying surface aspect ratios are equal which means each image occupies the whole displaying surface by default as illustrated on **Figure 1**. Note that the image appears to be of the same resolution (same number of pixels) as the displaying surface, but it can also happen that they have different resolutions while having the same aspect ratio. In this case, a media player may perform a simple rescaling operation preserving the aspect ratio of the image to adapt the resolution of the image to the displaying surface resolution.

As discussed above, the likelihood that an image aspect ratio and orientation match the displaying surface aspect ratio and orientation decreases as streaming services and screen technologies diversify. For instance, watching vertical image only became recently popular with the advent of image/video services on smartphones. Before smartphones, there were no display designed to be vertically oriented for watching videos.

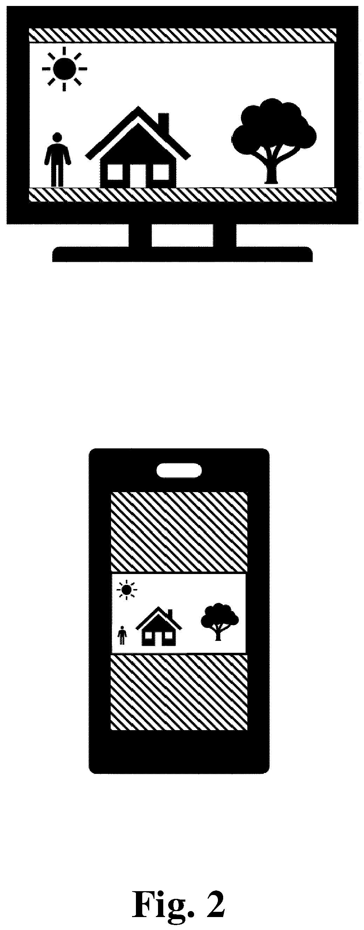

When the image and the displaying surface have a same orientation but not a same aspect ratio, conventional adaptation methods to adapt the image before displaying to an end-user are illustrated in **Figures 2-5**. For illustrative purposes, the displaying surface is the screen of a TV set, or of a phone but any other apparatus/device comprising a screen with the same orientation may be considered, for instance a TV set could be replaced by a smartphone oriented horizontally.

On **Figure 2,** a so-called letterboxing method is illustrated. Adapted to horizontal displaying surface (for example TV screen on top of **Figure 2**) or vertical displaying surface (for example smartphone screen on bottom of **Figure 2**), the letterboxing method adapts the number of columns of an image to the number of columns of the displaying surface. The displayed image is centred in the displaying surface keeping the aspect ratio of the image. Top and bottom rows which are not fulfilled by pixels of the image are padded with a colour for example.

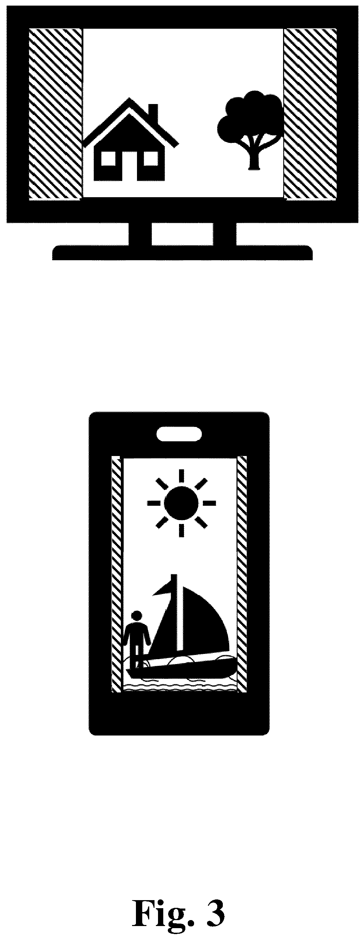

On **Figure 3,** a so-called pillar-boxing method is illustrated. Adapted to horizontal displaying surface (for example TV screen on top of **Figure 3**) and vertical displaying surface (for example smartphone screen on bottom of **Figure 3**), the pillar-boxing method adapts the number of rows of an image to the number of rows of the displaying surface. The displayed image is centred in the displaying surface keeping the aspect ratio of the image. Left and right columns which are not fulfilled by pixels of the image are padded with a colour for example.

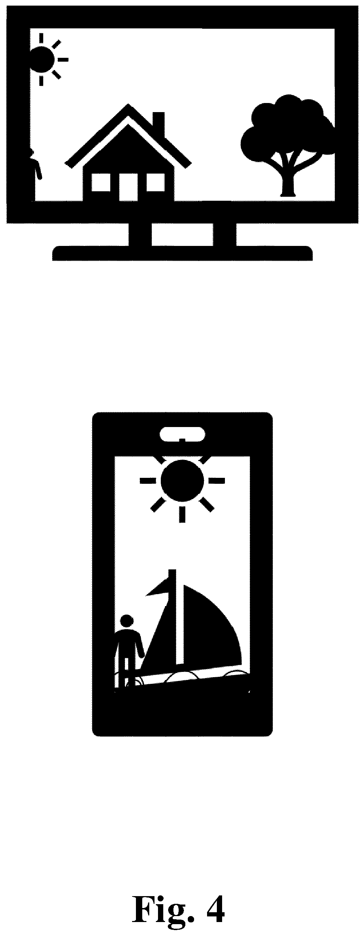

On **Figure 4,** a so-called zoom-to-fill method is illustrated. Adapted to horizontal displaying surface (for example TV screen on top of **Figure 4**) and vertical displaying surface (for example smartphone screen on bottom of **Figure 4**), the zoom-to-fill method applies a zoom to the image centred in the image until all the rows and columns of the displaying surface are fulfilled by pixel values of the image.

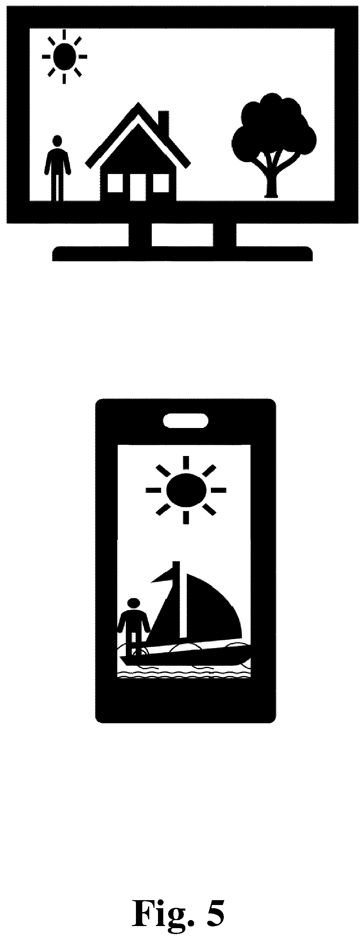

On **Figure 5,** a so-called stretch method is illustrated. Adapted to horizontal displaying surface (for example TV screen on top of **Figure 4**) and vertical displaying surface (for example smartphone screen on bottom of **Figure 4**), the stretch method stretches the image horizontally and/or vertically until all the rows and columns of the displaying surface are fulfilled by pixel values of the image.

The adaptation methods presented above for different aspect ratios, but same orientation offer an experience to the viewer that is generally considered as acceptable, hence the presence of those adaptation methods on many devices.

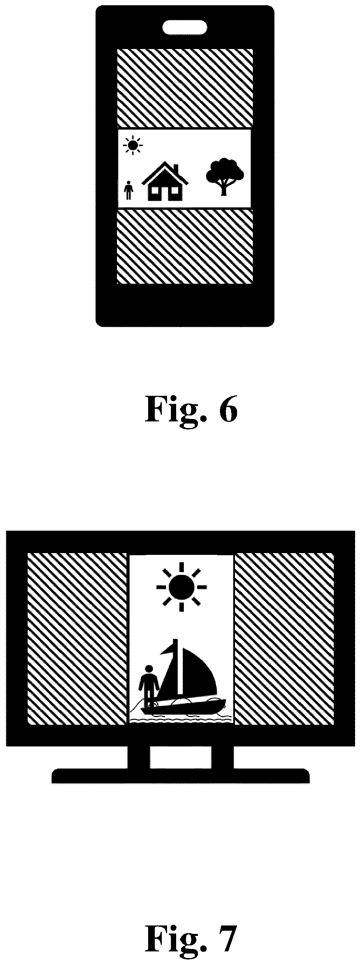

However, the same adaptation methods perform poorly when the image is shot in a different orientation than the displaying surface as illustrated on **Figure 6-11**.

On **Figure 6,** the letterboxing method is used to adapt an image shot in a horizontal direction and displayed on a vertical displaying surface. It is clear that the letterboxing method is not well-adapted in that case because the amount of padding accounts for a large portion of the displaying surface which renders the displayed image barely visible for and end-user.

On **Figure 7,** the pillar-boxing method is used to adapt an image shot in a vertical direction and displayed on a horizontal displaying surface.. It is clear that the pillar-boxing method is not well-adapted in that case because the amount of padding accounts for a large portion of the displaying surface which renders the image barely visible for and end-user.

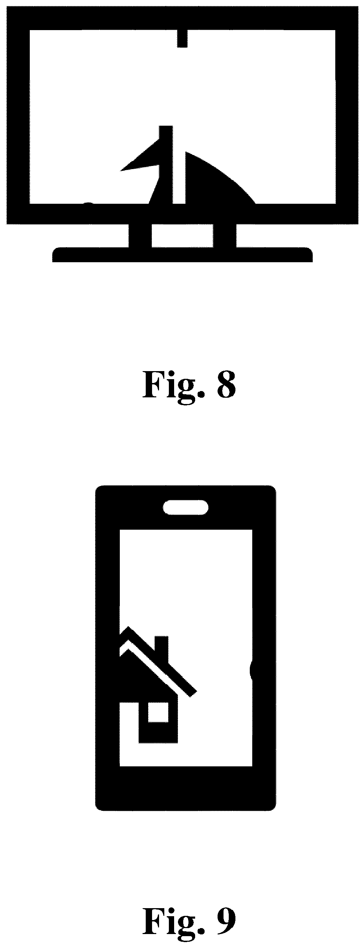

On **Figures 8** and **9,** the zoom-to-fill method adapts an image by automatically scaling, centring and cropping the image. The adaptation is so high that the visible content misses the important part of the image which makes hard or even impossible to follow the narrative of a video.

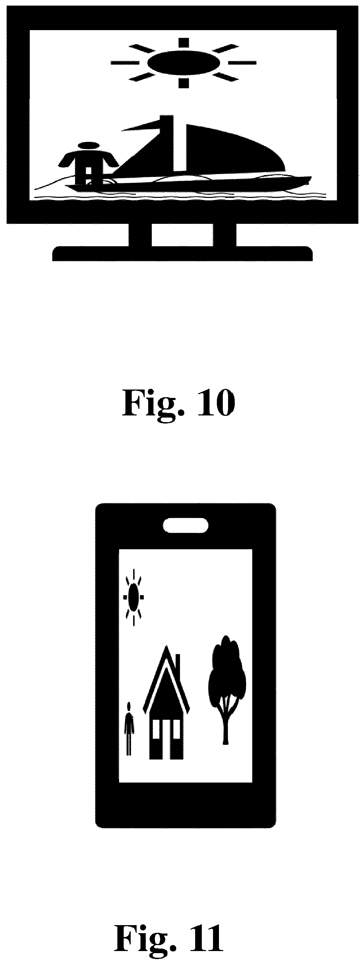

On **Figure 10** and **11,** because of the large difference of aspect ratio between the displaying surface and the image, the stretch method results in highly distorted visual content on the displaying surface. This also constitutes a poor quality of experience for the end-user.

There is thus a need to adapt the display of an image on displaying surface when the aspect ratio or the orientation or both are not matching.

In US patent US11322117B2, Kast et al. disclose an adaptation method and system comprising a mobile device and a media server. The media server hosts a media content for the mobile device to retrieve. In response to the detection of a change in the orientation of the mobile device, the mobile device is taught to adapt the image displayed to the end-user based on the new orientation of the mobile device. The image adaptation may comprise cropping and optionally padding in addition to it. When cropping happens, the mobile device identifies regions that should still be present after the cropping. To this end, either the mobile device analyses the image (or the video frames if it is a video) in order to calculate the cropping region to preserve those regions or the media server has already included metadata describing those regions such as bounding information around the features in the image (e.g. face, cars, etc..) and in this case, the mobile device simply calculates the cropping region based on this metadata. Either way, it results in a cropped image being display to the end-user. Optionally, the image displayed to the user may need padding when the identified region and the calculated cropping region containing the identified regions does not match the device aspect ratio and resolution.

The solution presented by Kast has the following disadvantages.

First, the mobile device calculates the cropping regions on a frame basis. When applied to a video, the cropping region may be inconsistent from one frame to another, e.g. jumping from left to right, oscillating around a position, etc...

Next, given the wide range of measure to detect the features in an image and then the cropping region, it is very likely that different implementations would lead to different results in terms of cropped image displayed. This heterogeneousness of the displayed content is detrimental to the end-user experience, as different viewers would watch different parts of the same content.

Next, since the cropped image is determined by an algorithm based on image features, it is impossible for the content creator to know in advance how the content will look like on mobile devices implementing the Kast's solution. In more when the cropping module adds padding region, there is no way for the content creator to decide which colours those padded area will be.

Next, when the cropped image needs further padding to match a target resolution and aspect ratio, this may create unconventional and likely displeasing experience for the viewer with padding area (e.g. top/bottom) that comes and goes, possible up to from one video frame to the next video frame.

Next, if the cropping module is performed on the mobile device, given that thousands of mobile devices would execute the same region identification steps for highly popular content, this is inefficient to execute those same steps on each mobile device.

Next, executing such region identification algorithm also impacts battery consumption which is detrimental for the end-user experience especially on mobile devices which have stringent battery constraints.

Next, using temporal analysis means keeping in memory more decoded images than normal increases thus the memory requirement and usage on the mobile device.

Next, if the cropping module is performed on the media server, this creates a second version of the same content asset which leads to increased storage cost (more still image/video stored), decreased cache efficiency (no content caching between users watching different versions), higher computational cost for encoding the new versions of the videos and still images, higher bandwidth requirement since more content has to be delivered by the media server to the mobile devices.

Next, to work well, the region identification, according to Kast et al., should use temporal analysis but analysing consecutive video frames buffering before displaying them and this additional buffering has the consequence of introducing latency in the presentation of the video. For live content, this is detrimental to the end-user experience where the viewer wants to be as close as possible from the live edge.

Consequently, there is a need in prior art to provide a client-based solution to the problem of adapting images (video frames and still images) shot in a given orientation (horizontal or vertical) and/or aspect ratio to a display surface whose orientation (horizontal or vertical) and/or aspect ratio would not match. A client-based solution is desirable to avoid an unnecessary duplication of content on the server and all the negative consequences as discussed above. In addition, such a client-based solution is desirable to provide the ability to the content creator to express the artistic intent when an image has to be adapted before displayed on a displaying surface in a manner that guarantees deterministic results across various implementations and be truthful to the content creator's intent.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of signaling encapsulated data representing image data of an image, the method comprising :

- writing image data of an image as encapsulated data; and

- writing alignment axis data, representing at least one target alignment axis of the image, as encapsulated data, each target alignment axis indicating a vertical or horizontal axis of the image intended to be used by a media player to display the image once said image has been aligned in such a way that a distance between a horizontal or vertical axis of a displaying surface and said target alignment axis is minimized in the limit of displaying the aligned image over the full displaying surface.

According to a second aspect of the present invention, there is provided a method of parsing encapsulated data representing image data of an image, the method comprising :

- obtaining image data of an image by parsing encapsulated data; and

- obtaining at least one target alignment axis of the image by parsing encapsulated data, each target alignment axis indicating a vertical or horizontal axis of the image intended to be used by a media player to display the image once said image has been aligned in such a way that a distance between a horizontal or vertical axis of a displaying surface and said target alignment axis is minimized in the limit of displaying the aligned image over the full displaying surface.

According to a third aspect of the present invention, there is provided a method of displaying image data of an image on a displaying surface, the method comprising :

- determining whether the aspect ratio of the image matches the aspect ratio of the displaying surface;

- if the aspect ratio of the image does not match the aspect ratio of the displaying surface,

  - determining whether displaying the image on the displaying surface causes at least one part of the image to go beyond the displaying surface boundaries in either horizontal or vertical direction;

  - if displaying the image on the displaying surface causes at least one part of the image to go beyond the displaying surface boundaries in horizontal direction,

    - obtaining a vertical target alignment axis of the image from encapsulated data;

    - obtaining a cropped region of the image once said image has been aligned in such a way that a distance between a vertical axis of the displaying surface and the vertical target alignment axis is minimized in the limit of displaying the aligned image over the full displaying surface;

  - if the displaying the image on the displaying surface causes at least one part of the image to go beyond the displaying surface boundaries in vertical direction,

    - obtaining a horizontal target alignment axis of the image from encapsulated data;

    - obtaining a cropped region of the image once said image has been aligned in such a way that a distance between a horizontal axis of a displaying surface and the horizontal target alignment axis is minimized in the limit of displaying the aligned image over the full displaying surface;

- displaying the cropped region of the aligned image on the displaying surface.

In one exemplary embodiment, a distance between an axis of the displaying surface and a target alignment axis is minimized when said distance is below a threshold .
In one exemplary embodiment, a video comprising multiple video frames, image data representing each video frame, and at least one target alignment axis of the video are signaled according to the method of the first aspect, parsing encapsulated data representing image data of each video frame and at least one target alignment axis of the video are parsed according to the method of the second aspect, image data of each video frame is displayed on the displaying surface according to the method of third aspect.
In one exemplary embodiment, at least one target alignment axis is defined for each video frame.
In one exemplary embodiment, at least one target alignment axis is defined for a group of video frames.

In one exemplary embodiment, multiple target alignment axes are defined according to certain aspect ratios of different displaying surfaces, one target alignment axis per aspect ratio.

In one exemplary embodiment, at least one target alignment axis definition varies over time or changes on a video frame or group of video frames basis.

According to a forth aspect, there is provided a container formatted to include encapsulated data obtained from a method of the first aspect.

In one exemplary embodiment, the container is a binary file, or a supplementary enhanced information message.

In one exemplary embodiment, the container is a ISOBMFF formatted file that conforms to the standard ISO/IEC 14496-12 or one of its derivatives.

According to a fifth aspect, there is provided an apparatus comprises means for performing one of the method of the first, second and/or third aspects.

According to a sixth aspect, there is provided a computer program product including instructions which, when the program is executed by one or more processors, causes the one or more processors to carry out a method of the first, second and/or third aspects.

According to a seventh aspect, there is provided a non-transitory storage medium carrying instructions of program code for executing a method a method of the first, second and/or third aspects.

The specific nature of at least one of the exemplary embodiments as well as other objects, advantages, features and uses of said at least one of exemplary embodiments will become even more apparent from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of an image displayed on a horizontal displaying surface according to prior art;

**Figure 2** shows an example of adapted image according to a letterboxing method before displaying said adapted image on horizontal and vertical displaying surfaces according to prior art;

**Figure 3** shows an example of adapted image according to a pillar-boxing method before displaying said adapted image on horizontal and vertical displaying surfaces according to prior art;

**Figure 4** shows an example of adapted image according to a zoom-to-fill method before displaying said adapted image on horizontal and vertical displaying surfaces according to prior art;

**Figure 5** shows an example of adapted image according to a stretch method before displaying said adapted image on horizontal and vertical displaying surface according to prior art;

**Figure 6** shows an example of adapted image according to letterboxing method before displaying said adapted image on vertical displaying surface according to prior art;

**Figure 7** shows an example of adapted image according to pillar-boxing method before displaying said adapted image on horizontal displaying surface according to prior art;

**Figure 8** shows an example of adapted image according to zoom-to-fill method before displaying said adapted image on horizontal displaying surface according to prior art;

**Figure 9** shows an example of adapted image according to a zoom-to-fill method before displaying said adapted image on vertical displaying surface according to prior art;

**Figure 10** shows an example of adapted image according to stretch method before displaying said adapted image on horizontal displaying surface according to prior art;

**Figure 11** shows an example of adapted image according to a stretch method before displaying said adapted image on vertical displaying surface according to prior art;

**Figure 12** shows a schematic block diagram of steps of a method 100 of signaling encapsulated data representing image data of an image, in accordance with at least one exemplary embodiment of the present invention;

**Figure 13** shows a schematic block diagram of steps of a method 200 of parsing encapsulated data representing image data of an image, in accordance with at least one exemplary embodiment of the present invention.

**Figure 14** shows a schematic block diagram of steps of a method 300 of displaying image data of an image on a displaying surface in accordance with at least one exemplary embodiment of the present application;

**Figure 15** shows an example of a horizontal shot image with a vertical target alignment axis in accordance with an exemplary embodiment;

**Figure 16** shows an example of a cropped region of the image of **Figure 15** displayed on a vertical displaying surface of a smartphone in accordance with an exemplary embodiment;

**Figure 17** shows an example of a cropped region of the image of **Figure 15** displayed on a vertical displaying surface of a tablet in accordance with an exemplary embodiment;

**Figure 18** shows an example of a vertical shot image with a horizontal target alignment axis in accordance with an exemplary embodiment;

**Figure 19** shows an example of a cropped region of the image of **Figure 18** displayed on a horizontal displaying surface of a TV set in accordance with an exemplary embodiment;

**Figure 20** shows an example of a cropped region of the image of **Figure 18** displayed on a horizontal displaying surface of a tablet in accordance with an exemplary embodiment;

**Figure 21** shows examples of cropped region of the image of **Figure 18** displayed on displaying surface with different aspect ratio in accordance with prior art ;

**Figure 22** shows examples of cropped region of the image of **Figure 18** displayed on displaying surface with different aspect ratio in accordance with an exemplary embodiment;

**Figure 23** show an example of a target alignment axis of an image located at the top of the image in accordance with an exemplary embodiment;

**Figure 24** shows an example of a cropped region in accordance with the target alignment axis of **Figure 23** ;

**Figure 25** show an example of a target alignment axis of an image located at the bottom of the image in accordance with an exemplary embodiment;

**Figure 26** shows an example of a cropped region in accordance with the target alignment axis of **Figure 25** ;

**Figure 27** show an example of a target alignment axis of an image located at an intermediate position of the image in accordance with an exemplary embodiment;

**Figure 28** shows an example of a cropped region in accordance with the target alignment axis of **Figure 27;**

**Figure 29** shows an example of definition of two target alignment axes on different characters of a video in accordance with an exemplary embodiment;

**Figure 30** shows the visual effect of a displayed video according the two target alignment axes of **Figure 29** ;

**Figure 31** shows schematically an overview of encapsulated target alignment axis data in a unique *Timed metadata track* in accordance with an exemplary embodiment;

**Figure 32** shows schematically an overview of encapsulated target alignment axis data in multiple *Timed metadata tracks* in accordance with an exemplary embodiment;

**Figure 33** shows schematically start times of video sample of a video track and target alignment axis sample of a *Timed metadata track* in accordance with an exemplary embodiment;

**Figure 34** shows schematically start times of video sample of a video track and target alignment axis sample of a *Timed metadata track* when target alignment axis samples does not vary for several video frames in accordance with an exemplary embodiment;

**Figure 35** shows schematically start times of video sample of a video track and target alignment axis sample of a *Timed metadata track* when target alignment axis samples are interpolated between no consecutive video samples in accordance with an exemplary embodiment;

**Figure 36** shows schematically start times of video sample of a video track and target alignment axis sample of a *Timed metadata track* when target alignment axis samples and video samples have different durations in accordance with an exemplary embodiment;

**Figure 37** shows a modified SEI payload syntax element of VVC to define a new SEI message type in accordance with an exemplary embodiment;

**Figure 38** shows a payload syntax element of the modified SEI payload syntax element of **Figure 37** in accordance with an exemplary embodiment;

**Figure 39** shows a schematic block diagram illustrating an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to signaling encapsulated data representing image data of an image (still image or video frame) and at least one target alignment axis of said image. One other aspect generally relates to producing/writing and possibly storing in a file or transmitting into a bitstream those encapsulated data and reading/accessing from a file or decoding from a bitstream those encapsulated data.

In the following, exemplary embodiments of the present application are discussed by considering an image as being either a still image or a video frame of a video. At least one target alignment axis is associated with a still image and at least one target alignment axis is associated with the video.

Encapsulation is a process of wrapping media representation within a container. Binary structures such as binary files are one instantiation of a container. Binary files define the syntax for parsing and understanding the structures of files. They have a start and an end and typically holds self-contained information. Binary files are generally transported and stored as a whole. However, binary files may be further segmented into smaller file units for the purpose of transmission over a network such as using HTTP-based transport. Popular standards for HTTP-based streaming are Apple HTTP Live Streaming (IETF Internet draft) and MPEG-DASH (Dynamic Adaptive Streaming over HTTP, ISO/IEC 23009-1).

When transmitting media data, a real-time protocol may also be chosen in order to meet the requirement of a targeted application. This is the case for instance for video conversional applications. In this case, bitstreams comprising data representing image data of an image and at least one target alignment axis of said image are typically encapsulated into transport packets (containers) and not as a file structure. For example, Real-time Transport Protocol (RTP) (RFC 3550) could be used. But other transport packet encapsulation may be used without any limit of the scope of the present application. A container may then be a bitstream, a network packet or a binary file.

In the following, exemplary embodiments of the present application are described by considering encapsulation of image data of an image and at least one target alignment axis of said image into a file based on an instantiation of a binary file, called ISOBMFF file as defined in the standard ISO/IEC 14496-12. But other file instantiation may be used without any limit of the scope of the present application.

Moreover, exemplary embodiments of a transport packet encapsulation could also be deduced from the following described exemplary embodiments of a file encapsulation by considering a transport standard as instantiation of a transport packet encapsulation rather than the described file encapsulation.

The at least one exemplary embodiment may apply to pre-existing or future-developed, and extensions of standards and recommendations. Unless indicated otherwise, or technically precluded, the aspects described in the present application may be used individually or in combination.

The principles of the present application are to signal encapsulated data representing both image data of an image and at least one target alignment axis of said image such that image and target alignment axis data can be compressed, stored and transmitted as efficiently possible based on their different characteristics while enabling, at a later stage, the processing for obtaining (parsing) image and target alignment axis data from the signaled encapsulated data.

In the following, exemplary embodiments of the present application are discussed by considering a displaying surface on which an image is intended to be displayed.

A displaying surface may be a full screen of a display device such a TV set or a smartphone or a sub-region of such a screen, i.e. a window defined on a display screen.

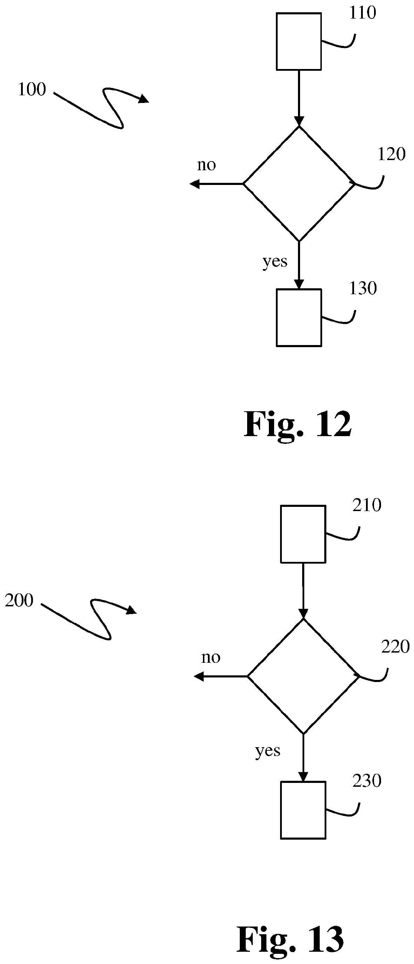

**Figure 12** shows a schematic block diagram of steps of a method 100 of signaling encapsulated data representing image data of an image, in accordance with at least one exemplary embodiment of the present invention.

In step 110, image data is written as encapsulated data.

In step 120, method 100 checks whether at least one target alignment axis of the image is available.

For example, a target alignment axis may be available when defined by a content creator or when target alignment axis data representing said target alignment axis is stored in a memory.

If not, method 100 ends.

Otherwise, in step 130, target alignment axis data representing at least one target alignment axis of the image is written as encapsulated data. Each target alignment axis indicating a vertical or horizontal axis of the image intended to be used by a media player to display the image once said image has been aligned with the displaying surface in such a way that a distance between a horizontal or vertical axis of the displaying surface and said target alignment axis is minimized in the limit of displaying the aligned image over the full displaying surface..

Minimising the distance between axes can lead to align those axes but when the target alignment axis is close from a boundary of the image, the axes cannot always be aligned exactly. Otherwise the displayed image would go beyond the boundaries of the image and may lead to padding which defeats the purpose of having a full screen image, i.e. the displayed image would not be displayed over the full displaying surface as expected.

Signaling a target alignment axis of an image defined by a content creator allows cropping visual content of the image according to the content's creator intent because an image region of the aligned image can be cropped around an axis of the displaying surface..

The exact size of the cropped visual content (cropped region) is not known at the time of defining a target alignment axis. The size of a cropped region is deduced only when this target alignment axis is considered in combination with a displaying surface.

Signaling a target alignment axis of an image is also advantageous because it does not overlap with a display mode that an end-user may choose before display (zoom to fill, scale, fit) but instead is complementary to it and merely provides a guidance for a media player whenever the chosen display mode leads to the discarding of some regions in the displayed image.

Signalling a target alignment axis is also advantageous because it does not require any additional image analysis on the mobile device or the server to perform the adapted displayed image but merely the adjustment of the display mode operation that conventionally exists.

**Figure 13** shows a schematic block diagram of steps of a method 200 of parsing encapsulated data representing image data of an image, in accordance with at least one exemplary embodiment of the present invention.

In step 210, image data of an image is obtained by parsing encapsulated data.

In step 220, method 200 checks if at least one target alignment axis of the image can be obtained by parsing encapsulated data.

If not, method 200 ends.

Otherwise, in step 230, at least one target alignment axis of the image is obtained by parsing encapsulated data.

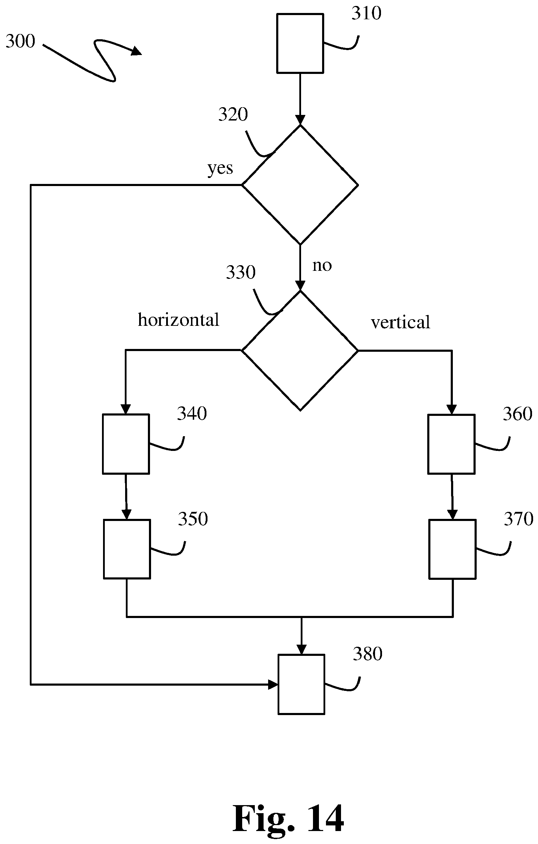

**Figure 14** shows a schematic block diagram of steps of a method 300 of displaying image data of an image on a displaying surface in accordance with at least one exemplary embodiment of the present application.

In optional step 310, a display mode for the image is selected.

For example, a display mode may apply a zoom-to-fill method, a rescaling, a letterboxing method, resolution changing, etc. to adapt the image to a displaying surface.

In a variant, the display mode may be selected by an end-user for example from user preferences or user input.

In a variant, the display mode may be selected by application logics.

In step 320, method 300 determines whether the aspect ratio of the image matches the aspect ratio of the displaying surface.

If the aspect ratio of the image matches the aspect ratio of the displaying surface, step 320 is followed by step 380.

If the aspect ratio of the image does not match the aspect ratio of the displaying surface, step 320 is followed by steps 330-370.

In step 330, method 300 determines whether displaying the image on the displaying surface causes at least one part of the image to go beyond the displaying surface boundaries in either horizontal or vertical direction.

In variant, if a display mode is applied on the image before display, in step 330, method 300 considered the image once the display mode is applied.

If displaying the image on the displaying surface causes at least one part of the image to go beyond the displaying surface boundaries in horizontal direction, in step 340, method 300 obtains a vertical target alignment axis of the image from encapsulated data and in step 350, method 300 obtains a cropped region of the image once said image has been aligned in such a way that a distance between a vertical axis of a displaying surface and said vertical target alignment axis is minimized in the limit of displaying the aligned image over the full displaying surface.

If displaying the image on the displaying surface causes at least one part of the image to go beyond the displaying surface boundaries in vertical direction, in step 360, method 300 obtains a horizontal target alignment axis of the image from encapsulated data, and in step 370, method 300 obtains a cropped region of the image once said image has been aligned in such a way that a distance between a horizontal axis of a displaying surface and said horizontal target alignment axis is minimized in the limit of displaying the aligned image over the full displaying surface.

Steps 360 and 370 are followed by step 380.

In step 380, method 300 displays the cropped region of the aligned image on the displaying surface.

In one exemplary embodiment, a distance between an axis of a displaying surface and a target alignment axis is minimized when said distance is below a threshold.

In another exemplary embodiment, a distance between an axis of a displaying surface and a target alignment axis is minimized when said distance is the smallest possible under the condition of filling the full displaying surface without using padding nor rescaling.

In one exemplary embodiment, a video comprising multiple video frames, image data representing each video frame and at least one target alignment axis of the video are signaled according to method 100, parsing encapsulated data representing image data of each video frame and at least one target alignment axis of the video are parsed according to method 200, and image data of each video frame is displayed on the displaying surface according to method 300.

In an exemplary embodiment, at least one target alignment axis is defined for each video frame of a video.

In one exemplary embodiment, at least one target alignment axis is defined for a group of video frames.

In one exemplary embodiment, the axis of the displaying surface is a central axis of the displaying surface.

In one exemplary embodiment, size of the cropped region is lower or equal to size of the displaying surface.

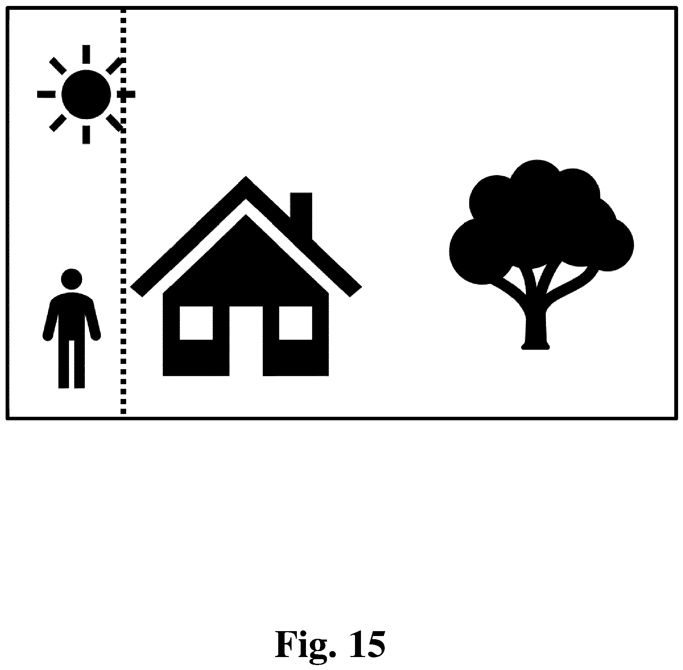

**Figure 15** shows an example of a horizontal shot image with a vertical target alignment axis in accordance with an exemplary embodiment.

On the left side of the image, the dotted line represents the vertical target alignment axis defined, for example, by a content creator. For a legacy client device not able to obtain the vertical target alignment axis by parsing encapsulated data, an automatic zoom-to-fill method (that uses the centre of the image, or centre of the content as reference) may result in a poor view of the image as depicted for example in **Figure 9.**

On the other hand, a device exercising the teaching of the present invention offers a better quality of experience as defined by the content creator who knows best how to adapt the image to a different displaying surface.

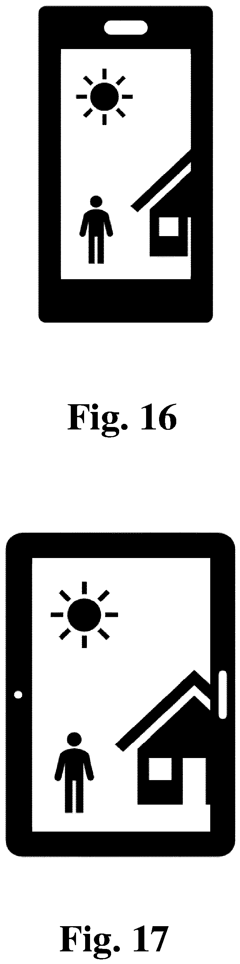

On **Figure 16,** a smartphone displays a cropped region of the horizontal shot image of **Figure 15**. The cropped region is defined around the vertical axis of the displaying surface once the image has been aligned in such a way that a distance between the vertical axis of the displaying surface and said vertical target alignment axis is minimized in the limit of displaying the aligned image over the full displaying surface (full screen of the smartphone).

On **Figure 17,** a tablet with a different resolution and aspect ratio, but also in a vertical orientation, displays the cropped region of the image of **Figure 15** following the same heuristics.

On **Figures 16** and **17,** cropped regions are determined from aligned images. Cropping regions have different sizes because the displaying surfaces have different sizes.

As can be seen, both smartphone and tablet are able to offer a higher quality of experience than legacy devices do. In addition, the content creator merely has to define a target alignment axis of the image without the need to know the resolution and aspect ratio of the end-user device. The same information can be used seamlessly by all sorts of devices.

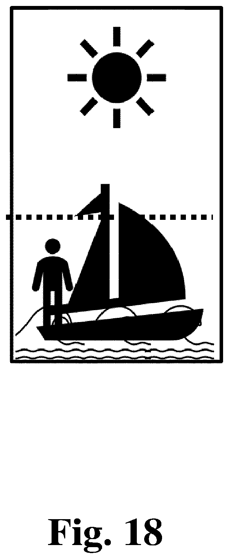

**Figure 18** shows an example of a vertical shot image with a horizontal target alignment axis in accordance with an exemplary embodiment.

At the bottom of the image, the dotted line represents the horizontal target alignment axis defined, for example, by a content creator in such a way the main part of the image will be presented to the end-user. For a legacy client device not able to obtain the horizontal target alignment axis by parsing encapsulated data, an automatic zoom-to-fill method (that uses the centre of the image, or centre of the content as reference) may result in a poor view of the image as depicted for example in **Figure 8** that shows a viewer would miss all the important information in the image and won't be able to follow the narrative.

On the other hand, a device exercising the teaching of the present invention offers a better quality of experience as defined by the content creator who knows best how to adapt the image to a different displaying surface.

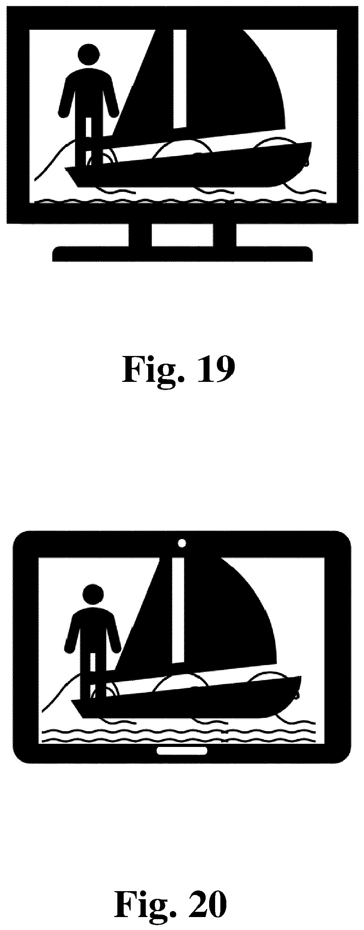

On **Figure 19,** a horizontal TV displays a cropped region of the vertical shot image of **Figure 18**. The cropped image is defined around the horizontal axis of the displaying surface once the image has been aligned in such a way that a distance between a horizontal or vertical axis of a displaying surface and the horizontal target alignment axis is minimized in the limit of displaying the aligned image over the full the displaying surface (full screen of the TV display).

On **Figure 20,** a tablet with a different resolution and aspect ratio, but also in a horizontal orientation, displays the cropped region of the image of **Figure 18** following the same heuristics.

As can be seen, both TV display and tablet are able to offer a higher quality of experience than legacy devices do. In addition, the content creator merely has to define the target alignment axis of the image without the need to know the resolution and aspect ratio of the end-user device. The same information can be used seamlessly by all sorts of devices.

There can be cases wherein a unique target alignment axis may give a good experience for a certain aspect ratio displaying surface and lower quality of experience for another aspect ratio displaying surface.

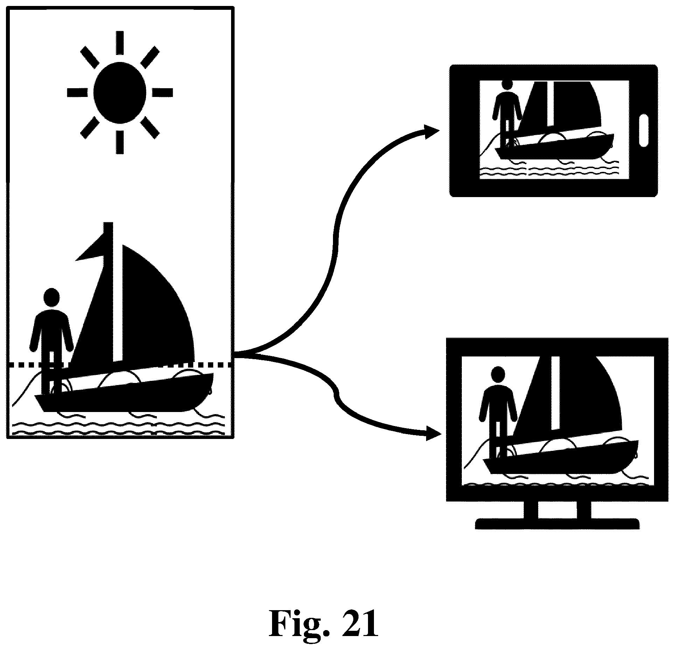

As can be seen on **Figure 21,** a displaying surface of a smartphone has an aspect ratio that is smaller in height compared to a TV display below. As a result, the same target alignment axis of the image yields a decent result for the TV set where the character is visible entirely with the waves while on the smartphone the head of the person is clipped at the top.

To alleviate such problems, in one exemplary embodiment, multiple target alignment axes are defined according to certain aspect ratios of different displaying surfaces, one target alignment axis per aspect ratio.

This exemplary embodiment is advantageous because multiple target alignment axes may be defined by the content creator such that the control on the resulting experience can be even more fine-tuned per device categories sharing a certain aspect ratio.

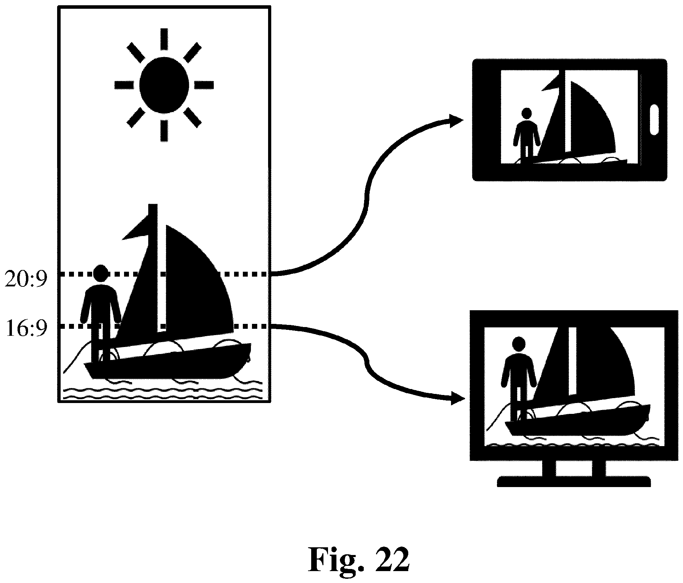

As can be seen on **Figure 22,** two target alignment axes are defined for the image, one for a 20:9 aspect ratio and another one for 16:9 aspect ratio. Each display device makes use of one of the target alignment axis that corresponds to or be the closest to its own aspect ratio. In the given example, the smartphone selects the target alignment axis for the 20:9 aspect ratio while the TV set selects the axis for the 16:9 aspect ratio. Compared to the situation of **Figure 21,** the smartphone now displays an image offering a higher quality of experience to the viewer with a complete view of the character.

Of course, the decision on where to place the target alignment axes and on the number of target alignment axes is still the responsibility of the content creator in order to define what should be the better experience for each aspect ratio.

In one exemplary embodiment, at least one target alignment axis definition varies over time or changes on a video frame or group of video frames basis. The content creator may choose this way to offer to the viewer a chance to see different parts of the visual content of the image.

This exemplary embodiment is advantageous because an image or a dynamic scene in a video may benefit from having target alignment axes that vary over time of video frame after video frame or group of video frames after group of video frames such that the viewer may have a look at different portion of the image or the dynamic scene.

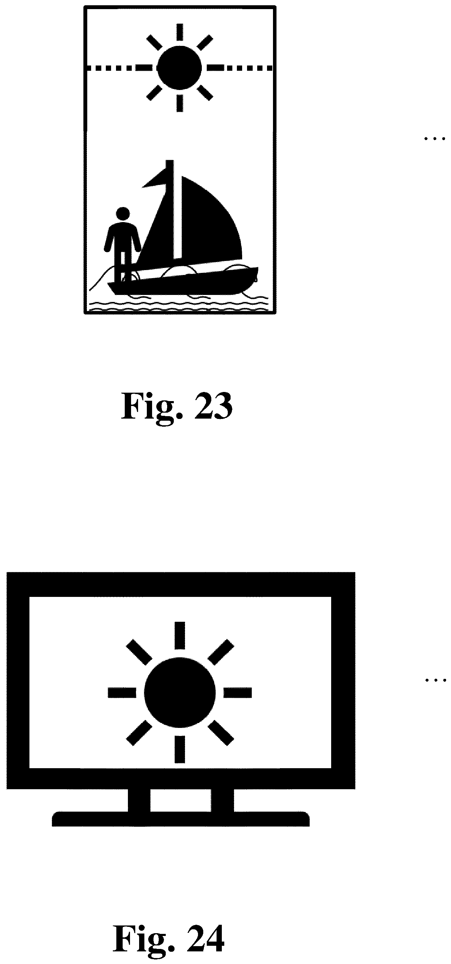

This exemplary embodiment is illustrated on **Figures 23-28**.

On **Figure 23**, a target alignment axis is located at the top of the image allowing the viewer to see the sun on a horizontal display of a TV set (**Figure 24**).

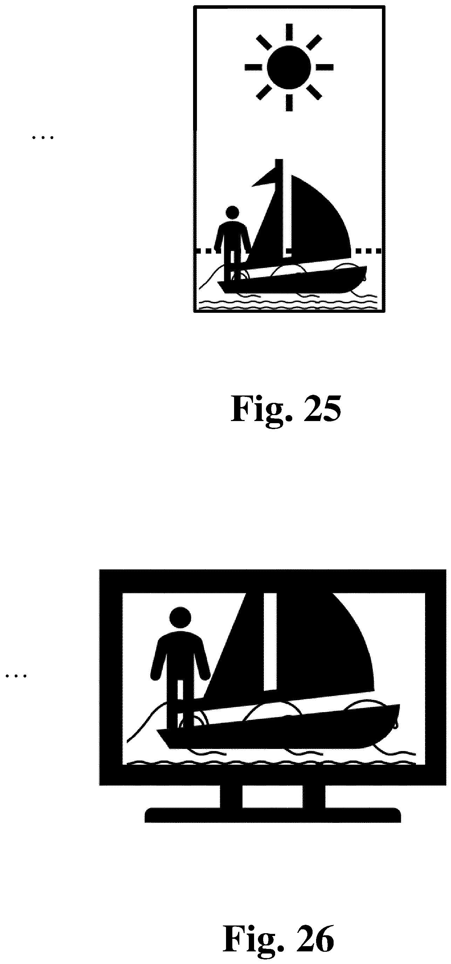

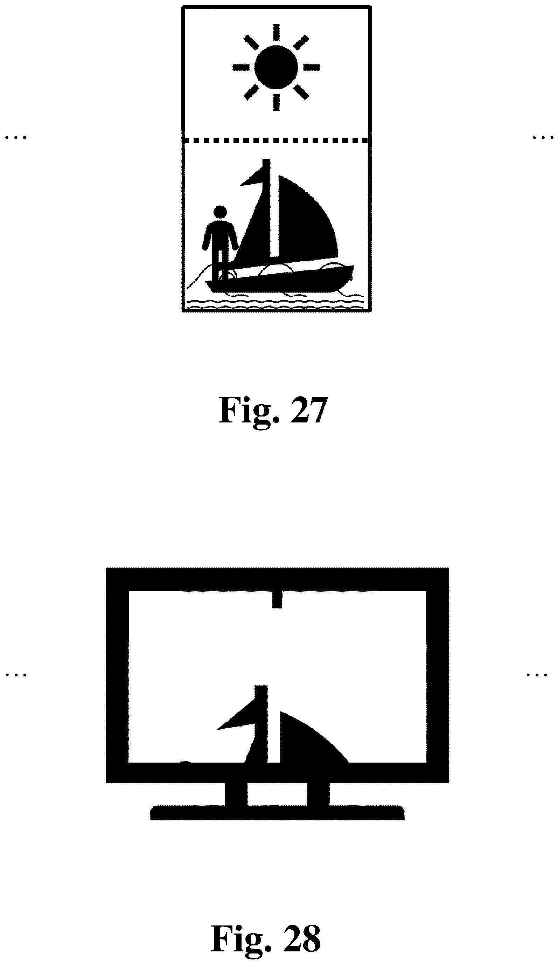

On **Figure 25**, a target alignment axis is located on the character in the image allowing the viewer to see the character on a horizontal display of a TV set (**Figure 26**). Considering a video, all the frames in between those two extreme frames would be associated with a target alignment axis in an intermediate position in order to create a smooth transition from those two positions. An arbitrary position in-between is represented by the image on **Figure 27** allowing the viewer to see the top of the boat on a horizontal display of a TV set (**Figure 28**).

The content creator may choose the speed and the trajectory of the different target alignment axis positions. This choice may be dictated by an effect desired on the viewer, fast, smooth, accelerating, decelerating, etc.

In other cases, the content creator may wish to set a target alignment axis in order to jump from one position of the image to another one without smooth transition. When a scene change occurs, this seems obvious that the target alignment axis would have a different position regardless of the one in the previous scene. Sometimes, even in the same scene, different target alignment axis may be desirable.

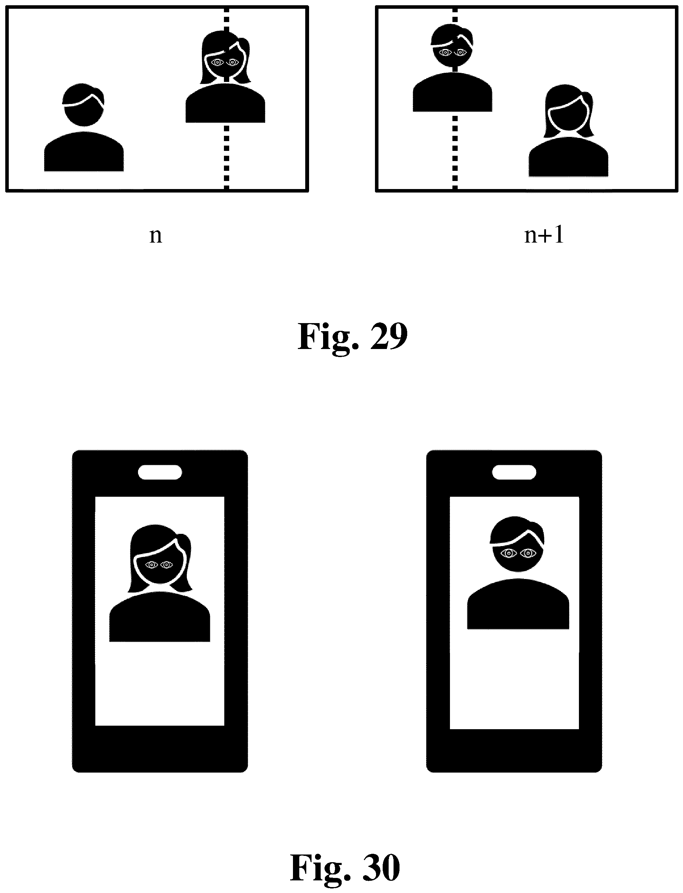

On **Figure 29,** the content creator wishes to centre the axis on the talking person in the shot of a video. On the left video frame (n), the target alignment axis is aligned on the female character. The result on vertical display **(Figure**

**30**) is that this female character is displayed on the centre of the displaying surface while the other character is not visible. At the next video frame (n+1), the shot has changed, and the male character is now talking and located on the left of the image. As a result, the target alignment axis is set now on the left of the image and the displayed image on the device is adapted accordingly.

Note that between those video frames, the display device must not display transition effect if more video frames are present but jump from one to another if no other target alignment axis position is signalled in-between.

In one exemplary embodiment of methods 100 and 200, encapsulated data representing image data of an image and at least one target alignment axis of the image are written in a media container and said encapsulated data are obtained by parsing a media container.

In one exemplary embodiment, image data of an image and target alignment axis data representing at least one target alignment axis of the image may be encapsulated in a formatted file (file-based container) for file storage or segment streaming or packet-based, e.g. RTP, for network transmission.

In the following, a media container is an ISOBMFF formatted file that conforms with the standard ISO/IEC 14496-12 or one of its derivatives. However, other media container, e.g. WebM, (https://www.webmproject.org/docs/container/) may be used.

As previously discussed, any display mode such as any cropping, scaling for example, signalled in an ISOBMFF e.g. via the *CleanApertureBox* defined in the ISOBMFF standard, is applied on the image first and then the image is aligned in such a way that a distance between a horizontal or vertical axis of a displaying surface and a target alignment axis is minimized in the limit of displaying the aligned image over the full displaying surface, on the resulting image to obtain a cropped region of said aligned image.

In one exemplary embodiment, target alignment axis data of an image may be signalled (written in/ read from) in a new box entitled *Target alignment axes* box defined from a new class TargetAlignmentAxes. This new class may be added to the current ISOBMFF standard or one of its derivative standards.

Since the new box *Target alignment axes* must be associated with a video track, it makes sense to include this new box *Target alignment axes box* within a *TrackBox* box as defined in the ISOBMFF standard. More precisely, the target alignment axis data would only be applicable to visual information type of media. As a result, one may place this new box *Target alignment axes box* inside the *VisualSampleEntry* syntax element as defined in ISOBMFF standard and be used when relevant, i.e. when the visual sample entry relates to a 2D image or 2D video.

For example, the proposed syntax leverages the flags parameter which is a 24-bit field for all boxes deriving from *FullBox* box as defined in ISOBMFF standard. This parameter can thus hold up to 24 flags. According to the present invention, flags are used to signal the conditional presence of a horizontal or vertical target alignment axis.

An example of syntax for the new class *Target alignment axes* is given in table 1:

Table 1

```
class TargetAlignmentAxes extends FullBox('taax', version,
flags){
      if (flags & 0x000001) {
            unsigned int(16) horizontal_target_axis;
      }
      if (flags & 0x000002) {
            unsigned int(16) vertical_target_axis;
      }
}
```

where *horizontal_target_axis* is a 0.16 fixed-point number which corresponds to a normalized location of a horizontal target alignment axis of the image. This number is comprised between 0.0 and 1.0., and where *vertical_target_axis* is a 0.16 fixed-point number which corresponds to a normalized location of a vertical target alignment axis of the image. This number is comprised between 0.0 and 1.0.

When both target alignment axes are absent the box *Target alignment axes* may be considered as badly authored by the file writer.

When both target alignment axes are present, the vertical target alignment axis is selected if the cropped region of the aligned image overflows a horizontal boundary of the displaying surface and the horizontal target alignment axis is selected if the cropped region of the aligned image overflows a vertical boundary of the displaying surface.

In one exemplary embodiment, target alignment axis data of an image may be signalled in two flag fields inside the new box *Target alignment axes* could be present to gate the presence of each target alignment axis data.

An example of syntax for the new class *Target alignment axes* is given in table 2:

Table 2

```
class TargetAlignmentAxes extends FullBox('taax', version,
flags){
    unsigned int(1) horizontal_target_axis_present_flag;
    unsigned int(1) vertical_target_axis_present_flag;
    unsigned int(6) reserved;
    if (horizontal_target_axis_present_flag) {
        unsigned int(16) horizontal_target_axis;
    }
    if (vertical_target_axis_present_flag) {
        unsigned int(16) vertical_target_axis;
    }
}
```

where *horizontal_target_axis_present_flag* indicates when equal to '1' the presence of horizontal target alignment axis data, *vertical_target_axis_present_flag* indicates when equal to '1' the presence of vertical target alignment axis data, *horizontal_target_axis* is a 0.16 fixed-point number which corresponds to a normalized location of a horizontal target alignment axis of the image. This number is comprised between 0.0 and 1.0, and *vertical_target_axis* is a 0.16 fixed-point number which corresponds to a normalized location of a vertical target alignment axis of the image. This number is comprised between 0.0 and 1.0.

In yet another alternative, both axes filed are present but they use a specific value to indicate to the file reader that the field is actually not used. A typical value for this would be '0'.

Additionally, the new class *TargetAlignmentAxes* enables a per-aspect ratio signalling with the following syntax given in table 3.

Table 3

```
class TargetAlignmentAxis extends FullBox('taax', version, flags){
    unsigned int(32) entry_count;
    int i;
    for (i=0; i < entry_count; i++) {
        unsigned int(16) aspectRatioN;
        unsigned int(16) aspectRatioD;
        unsigned int(1) horizontal_target_axis_present_flag;
        unsigned int(1) vertical_target_axis_present_flag;
        unsigned int(6) reserved;
        if (horizontal_target_axis_present_flag) {
            unsigned int(16) horizontal_target_axis;
        }
        if (vertical_target_axis_present_flag) {
            unsigned int(16) vertical_target_axis;
        }
    }
}
```

where *aspectRatioN* and *aspectRatioD* are respectively the numerator and the denominator of an aspect ratio defined by aspectRatioN/ aspectRatioD which defines an aspect ratio for which target alignment axes are recommended to be used with.

In this example, since the presence of the horizontal and vertical target alignment axes are depending on the aspect ratio, one cannot use the flags field as in the previous exemplary embodiment since some aspect ratio may have a different combinations of signaled target alignment axes. Therefore, two flags in the new box *Target alignment axes* may be written/read in order to indicate the presence of those target alignment axes for each aspect ratio.

In this situation, a display device may look for an aspect ratio that is the closest to the displaying surface use to present the cropped region of the image to the viewer.

In one exemplary embodiment, default target alignment axes of the image may be signalled in the new box *Target alignment axes* if a signaled aspect ratio do not match the aspect ratio of the displaying surface.

An example of syntax for the new class *Target alignment axes* is given in table 4.

Table 4

```
class TargetAlignmentAxis extends FullBox('taax', version, flags){
        if (flags & 0x000001) {
                if (flags & 0x000002) {
                        unsigned int(16) default_horizontal_target_axis;
                }
                if (flags & 0x000004) {
                        unsigned int(16) default_vertical_target_axis;
                }
        }
        unsigned int(32) entry_count;
        int i;
        for (i=0; i < entry_count; i++) {
                unsigned int(16) aspectRatioN;
                unsigned int(16) aspectRatioD;
            unsigned int(1) horizontal_target_axis_present_flag;
            unsigned int(1) vertical_target_axis_present_flag;
            unsigned int(6) reserved;
            if (horizontal_target_axis_present_flag) {
                    unsigned int(16) horizontal_target_axis;
            }
            if (vertical_target_axis_present_flag) {
                    unsigned int(16) vertical_target_axis;
            }
        }
}
```

wherein *default_horizontal_target_axis,* respectively *default_vertical_target_axis,* is a 0.16 fixed-point number which corresponds to a normalized location of a horizontal, respectively vertical, axis of the image, irrespective of any aspect ratio used for displaying the image. Both numbers are comprised between 0.0 and 1.0.

Here flags may also be used field to gate the presence of the default target alignment axes presence but dedicated flags in the new box *Target alignment axes* may also be used to gate said presence.

Signalling target alignment axis data of an image in a new box entitled *Target alignment axes* box works fine for images and video content for which a single target alignment axis per direction is suitable for the duration of the video content since it is present once at the track level and applicable for the entire track.

Given the static nature of this signalling method, this method cannot enable dynamic features of the present invention as described in relation with **Figures 23-28**.

In one exemplary embodiment, target alignment axis of an image may be signalled in *Sample groups* of an ISOBMFF as defined in ISOBMFF standard. The concept of sample groups allows to attach data to certain samples in a track which collectively constitute a sample group. There are two main boxes for this concept, the first one denoted SampleToGroupBox assigns samples to an entry index. The second one SampleGroupDescriptionBox lists all the entries describing the available groups. This way, each sample of a track can be linked to a certain group via it associated entry index.

For completeness, tables 5 and 6 provide a syntax of the above-mentioned boxes as defined in current ISOMBFF standard.

Table 5

```
aligned(8) class SampleToGroupBox extends FullBox('sbgp', version, 0)
{
```

(continued)

```
        unsigned int(32) grouping_type;
        if (version == 1) {
                unsigned int(32) grouping_type_parameter;
        }
        unsigned int(32) entry_count;
        for (i=1; i <= entry_count; i++) {
                unsigned int(32) sample_count;
                unsigned int(32) group_description_index;
        }
}
```

```
aligned(8) class SampleGroupDescriptionBox () extends FullBox('sgpd',
version, flags){
        unsigned int(32) grouping_type;
        if (version>=1) { unsigned int(32) default length;          }
        if (version>=2) {
                unsigned int(32) default_group_description_index;
        }
        unsigned int(32) entry_count;
        int i;
        for (i = 1 ; i <= entry_count ; i++){
                if (version>=1) {
```

```
                if (default_length==0) {
                        unsigned int(32) description_length;
                }
        }
        SampleGroupDescriptionEntry (grouping_type);
        // an instance of a class derived from
SampleGroupDescriptionEntry
        // that is appropriate and permitted for the media type
        }
}
```

Table 6

Signalling target alignment axis of an image in *Sample groups* of an ISOBMFF as defined in ISOBMFF standard allows to change the target alignment axes data throughout the track as opposed to signalling target alignment axis of an image in a new box entitled *Target alignment axes* box.

Note that used *Sample groups* of an ISOBMFF are visual sample groups since the tracks are video tracks and the samples are still images or video frames.

To this end, any exemplary embodiment of the new TargetAlignmentAxis box as discussed above may be used to define an entry for such sample group descriptions.

An example of syntax for the new class TargetAlignmentAxisEntry() is given in table 7.

Table 7

```
class TargetAlignmentAxisEntry() extends VisualSampleGroupEntry ('taax')
{
        unsigned int(1) horizontal_target_axis_present_flag;
        unsigned int(1) vertical_target_axis_present_flag;
        unsigned int(6) reserved;
        if (horizontal_target_axis_present_flag) {
                unsigned int(16) horizontal_target_axis;
        }
        if (vertical_target_axis_present_flag) {
                unsigned int(16) vertical_target_axis;
        }
}
```

wherein *VisualSampleGroupEntry* extends *SampleGroupDescriptionEntry* as defined in clause 8.9.3.2 of current ISOBMFF standard.

An example of syntax for the new class *VisualSampleGroupEntry* is given in table 8.

Table 8

```
abstract class VisualSampleGroupEntry (unsigned int(32) grouping_type)
extends SampleGroupDescriptionEntry (grouping_type) { }
```

As reminder, the proposed TargetAlignmentAxisEntry may have the same different exemplary embodiments as the TargetAlignmentAxis box as discussed above.

When the number of positions comes close to the frequency of the video frames, i.e. there is a need to signal almost as many locations as there are video frames, then signalling target alignment axis of an image in *Sample groups* of an ISOBMFF as defined in ISOBMFF standard becomes verbose and byte-wise inefficient. In addition, the number of groups is limited by the 32-bit unsigned field *group_description_index.*

In such scenario, in one exemplary embodiment, target alignment axis of an image may be signalled in *Timed metadata tracks* of an ISOBMFF as defined in the current ISOBMFF standard.

A *Timed metadata track* contains a sequence of data, each data point being a sample of the track. Using *Timed metadata tracks* allow to have the greatest flexibility in terms of time accuracy of the signalled target alignment axes.

The *Timed metadata tracks* could contain only a few samples for the entire duration of a video or in more extreme cases, one sample for each video frame, or even several samples for the duration of one video frame. The fact that the temporal granularity of the target alignment axes data may be lower than a given video track may be the consequence of creating the metadata track for a video produced at a high frame rate, e.g. 60Hz, but another version of the video was then produced at 30Hz, and it was easier no to convert the target alignment axes data track. Another reason could be that the content creator anticipates that the display device may interpolate video frames in-between the decoded video frames for smoother playback (display) and by adding more samples per video samples, this guarantees that the display device will use the correct target alignment axes data provided in the track and will not have to interpolate the target alignment axes data itself, which could be inconsistently across different display devices.

In a variant of the last exemplary embodiment, target alignment axis of an image may be signalled in a unique *Timed metadata track* of an ISOBMFF as defined in the current ISOBMFF standard.

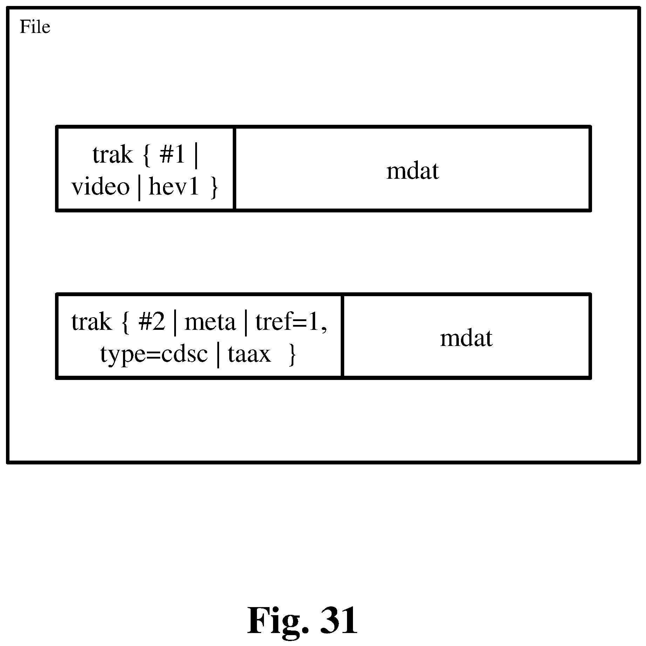

**Figure 31** shows schematically an overview of encapsulated target alignment axis data in a unique *Timed metadata track.*

A first track #1 is a video track identified by a video handler. A codec of a video track may be the HEVC codec, and the encoding and the video track follows the constraints defined by a 'hev1' sample entry. Note that the sample entry 'hev1' may be defined in the ISO/IEC 14496-15 standard.

A second track #2 is a metadata track identified by a meta handler. A track reference information *tref* indicates that the second track #2 refers to the first track #1 with track reference type *cdsc*. A reference type *cdsc* links a descriptive or metadata track to a content that it described according to the ISOBMFF standard. According to the variant, a sample entry *taax is* introduced to indicate that a target alignment axis is linked with the first track.

As defined by ISOBMFF, a metadata sample entry is defined as a class *MetaDataSampleEntry* that extends a class SampleEntry:

```
class MetaDataSampleEntry(codingname) extends SampleEntry
(codingname) { }
```

where *codingname is a parameter of the class SampleEntry.*

According to an implementation of the variant, a new class *TargetAlignmentAxisSampleEntry*() extends the class *MetaDataSampleEntry* with parameter *taax.*

An example of syntax of the new class *TargetAlignmentAxisSampleEntry*() is given in table 9.

Table 9

| class TargetAlignmentAxisSampleEntry() extends MetaDataSampleEntry ('taax') { |
| --- |
| unsigned int(1) horizontal_target_axis_sample_present_flag; |
| unsigned int(1) vertical_target_axis_sample_present_flag; |
| unsigned int(6) reserved; |
| } |

where *horizontal_target_axis_sample_present_flag* indicates when equal to '1' the corresponding track may contain samples carrying horizontal target alignment axis data and *vertical_target_axis_sample_present_flag* indicates when equal to '1' the corresponding track may contain samples carrying vertical target axis data.

An example of syntax of a new class TargetAlignmentAxisSample corresponding to an associated sample format defining a sequence of samples in a mdat box, is given in Table 10.

Table 10

| class TargetAlignmentAxisSample() { |
| --- |
| unsigned int(1) horizontal_target_axis_present_flag; |
| unsigned int(1) vertical_target_axis_present_flag; |
| unsigned int(6) reserved; |
| if (horizontal_target_axis_present_flag) { |
| unsigned int(16) horizontal_target_axis; |
| } |
| if (vertical_target_axis_present_flag) { |
| unsigned int(16) vertical_target_axis; |
| } |
| } |

A single sample of a track may thus contain both vertical and horizontal target alignment axis data. Since the granularity and update frequency may be different for each vertical and horizontal dimension, it may be easier for content authoring to define separate tracks for each dimension.

To alleviate this problem, in one variant, multiple *Timed metadata tracks* are used and each *Timed metadata track* only contains sample for at least one target alignment axis in one dimension.

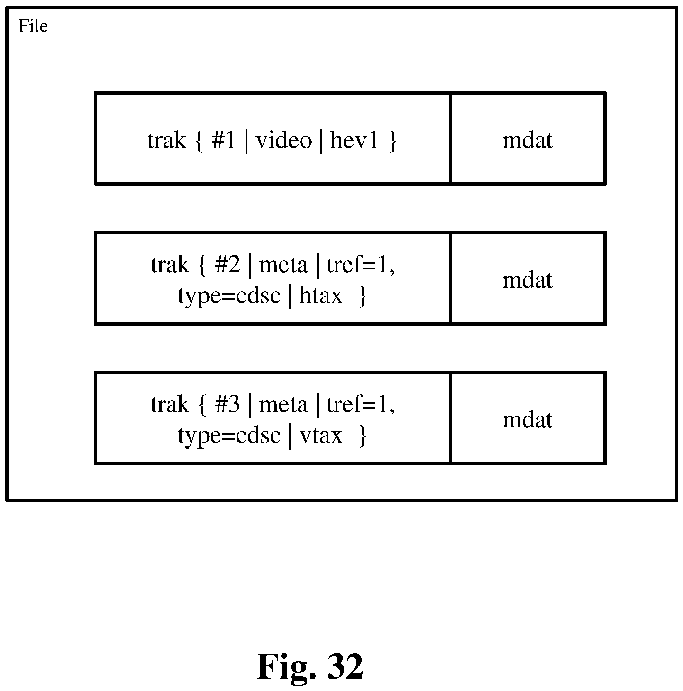

**Figure 32** shows schematically an overview of encapsulated target alignment axis data in multiple *Timed metadata tracks.*

A first track #1 is identical to the first track #1 of **Figure 31**.

A second track #2 is a metadata track identified by a meta handler and refers to the first track via a track reference of type *cdsc*. A sample entry *htax* is introduced to indicate that a horizontal target alignment axis is linked with the first track.

A third track #3 is a metadata track identified by a meta handler and refers to the first track via a track reference of type *cdsc.* A sample entry *vtax* is introduced to indicate that a vertical target alignment axis is linked with the first track.

Since the display device will operate in a given orientation for a certain period of time, it can be advantageous for a player to select the track that fits its need.

Hence there is no need to parse sample containing the other type of target alignment axis that is of no interest for the current operation mode. For the content authoring, it is also easier to handle per track when the target alignment axis are created or modified. With such track separation, if only the horizontal target alignment axis are created or modified, only those samples are impacted and not the one from the vertical target alignment axis.

A metadata sample entry may be defined as a class *HorizontalTargetAlignmentAxisSampleEntry* that extends *MetaDataSampleEntry* with parameter *htax*

```
class HorizontalTargetAlignmentAxisSampleEntry() extends
MetaDataSampleEntry ('htax') {}
```

or with parameter vtax:

```
class VerticalTargetAlignmentAxisSampleEntry() extends
MetaDataSampleEntry ('vtax') {}.
```

These sample entries are empty and merely indicate the type of samples in the track without further information. This is allowed by the ISOBMFF standard.

An example of syntax of a new class TargetAlignmentAxisSample corresponding to an associated sample format defining a sequence of samples in a mdat box, is given in table 11 for horizontal target alignment axis data,

Table 11

```
class HorizontalTargetAlignmentAxisSample() {
            unsigned int(16) horizontal_target_axis;
}
```

and in table 12 for vertical target alignment axis data,

Table 12

```
class VerticalTargetAlignmentAxisSample(){
            unsigned int(16) vertical_target_axis;
}
```

When target alignment axis data is encapsulated as samples of *Timed metadata tracks,* there can be several cases to derive the target alignment axis data associated with a video frames.

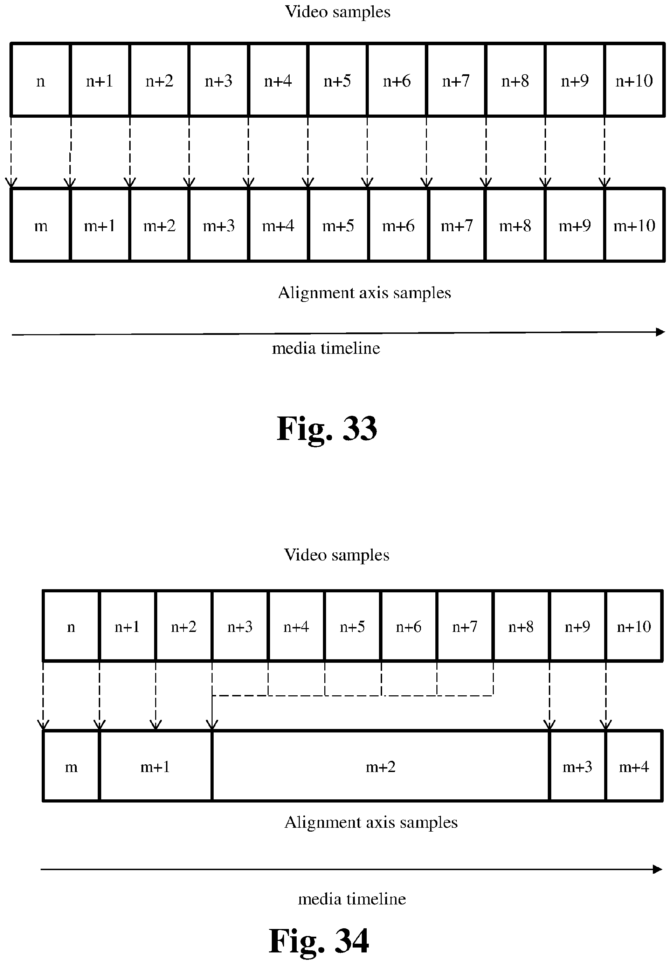

In one exemplary embodiment, each video sample (video frame) of a video track has the same start time as a sample in the *Timed metadata track* as illustrated on **Figure 33**.

In this case, a mapping between video sample and target alignment axis sample may be given in table 13.

Table 13

| Video sample | Target alignment axis sample |
|---|---|
| n | m |
| n+1 | m+1 |
| n+2 | m+2 |
| n+3 | m+3 |
| n+4 | m+4 |
| n+5 | m+5 |
| n+6 | m+6 |
| n+7 | m+7 |

(continued)

| Video sample | Target alignment axis sample |
|---|---|
| n+8 | m+8 |
| n+9 | m+9 |
| n+10 | m+10 |

However, it can be useful when a target alignment axis does not vary for several video frames to define a metadata sample with a longer duration as illustrated in **Figure 34**.

To handle this use case, in one exemplary embodiment, each video sample is associated with a target alignment axis sample that is available at the time of the video sample start time.

In this case, an example of mapping between video sample and target alignment axis sample may be given in table 14.

Table 14

| Video sample | 1 lignment axis sample |
|---|---|
| n | m |
| n+1 | m+1 |
| n+2 | m+2 |
| n+3 | m+2 |
| n+4 | m+2 |
| n+5 | m+2 |
| n+6 | m+2 |
| n+7 | m+2 |
| n+8 | m+2 |
| n+9 | m+3 |
| n+10 | m+4 |

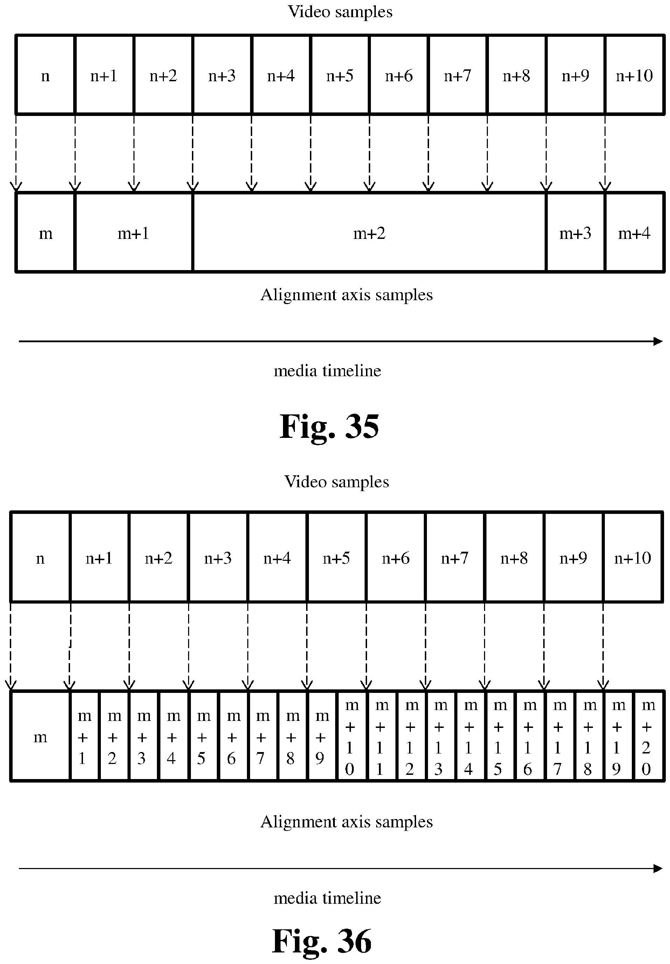

To handle this use case, a movement of a target alignment axis follows a certain movement which can be derived from an interpolation mode. As a result, it would be more efficient to not create one target alignment axis sample per video sample but instead create two target alignment axis samples between two specific points and instruct a media player to interpolate the value of the target alignment axis positions that are in between those points as illustrated in **Figure 35**.

In one exemplary embodiment, an extra parameter *interpolate* is added, for example, in the class *HorizontalTargetAlignmentAxisSampleEntry* as given in Table 15 for horizontal target alignment axis,

Table 15

```
class HorizontalTargetAlignmentAxisSampleEntry() extends MetaDataSampleEntry ('htax')
{
                              unsigned int(1) interpolate;
                              unsigned int(7) reserved;
}
```

and in the class *VerticalTargetAlignmentAxisSampleEntry as* given in Table 16 for vertical target alignment axis,

Table 16

```
class VerticalTargetAlignmentAxisSampleEntry() extends MetaDataSampleEntry ('vtax')
{
```

(continued)

```
                                           unsigned int(1) interpolate;
                                           unsigned int(7) reserved;

        }
```

wherein *interpolate* indicates the continuity in time of the successive samples. When true, an application may linearly interpolate values of the horizontal (or vertical) target alignment axis between a previous sample and a current sample. When false, there shall not be any interpolation of values between a previous and a current samples.

For illustration purposes, the extra parameter *interpolate* is added in the class *HorizontalTargetAlignmentAxisSampleEntry* but can also be added in any other class could also be modified to carry the extra parameter *interpolate*.

In a variant, a linear interpolation is used and an example of mapping between video sample and target alignment axis sample may be given in table 17.

Table 17

| Video sample | Target alignment axis value |
|---|---|
| n | m |
| n+1 | m+1 |
| n+2 | $m+2 + (m+2 - m+1) / 2$ |
| n+3 | m+2 |
| n+4 | $m+2 + (m+3 - m+2) \times 1/6$ |
| n+5 | $m+2 + (m+3 - m+2) \times 2/6$ |
| n+6 | $m+2 + (m+3 - m+2) \times 3/6$ |
| n+7 | $m+2 + (m+3 - m+2) \times 4/6$ |
| n+8 | $m+2 + (m+3 - m+2) \times 5/6$ |
| n+9 | m+3 |
| n+10 | m+4 |

In table 17, n+i and m+i must not be considered as operator but just as variable names.

In a variant, an extra parameter *interpolate_mode* may indicate which interpolation method to use.

To this end, the extra parameter *interpolate_mode* is added, for example, in the class *HorizontalTargetAlignmentAxisSampleEntry* as given in Table 18 for horizontal target alignment axis,

```
class          HorizontalTargetAlignmentAxisSampleEntry()          extends
MetaDataSampleEntry                    ('htax')                    {
        unsigned int(8) interpolate_mode;
    // plus more fields, such as coefficients, depending on interpolation mode
}
```

Table 18

and in the class *VerticalTargetAlignmentAxisSampleEntry* as given in Table 19 for vertical target alignment axis,

```
class VerticalTargetAlignmentAxisSampleEntry() extends
MetaDataSampleEntry ('vtax') {
        unsigned int(8) interpolate_mode;
// plus more fields, such as coefficients, depending on interpolation mode
```

Table 19

*interpolate_mode* indicates the continuity in time of the successive samples.

For example, when *interpolate_mode* equal to '0' no interpolation is done. Otherwise, an application may interpolate samples of the horizontal (vertical) target alignment axis between a previous sample and a current sample as illustrated in Table 20.

Table 20

| value | Interpolation mode |
|---|---|
| 0 | No interpolation |
| 1 | Piecewise constant interpolation |
| 2 | Linear interpolation |
| 3 | Polynomial interpolation |
| 4 | Spline interpolation |
| 5 | Application specific |

Alternatively, an interpolation mode may be specific to group of samples and in this case, the interpolation mode signalling may be turned into a sample group description.

For brevity of the present application, the additional fields for polynomial and spline interpolation were not represented in the signalled presented above. For more information on interpolation modes please refers to https://en.wikipedia.org/wiki/Interpolation.

In some use cases, samples in a *Timed metadata track* may be sparse, that is for some portions of the media timeline, there is no overlapping target alignment axis sample for each video sample and additional signalling is needed to disambiguate these use cases.

To handle such use cases, in one exemplary embodiment, an extra field *missing_sample_processing* is added, for example, in the class *HorizontalTargetAlignmentAxisSampleEntryas* given in Table 21 for horizontal target alignment axis,

Table 21 and in the class *VerticalTargetAlignmentAxisSampleEntry* as given in Table 22 for vertical target alignment axis,

```
class HorizontalTargetAlignmentAxisSampleEntry() extends MetaDataSampleEntry ('htax') {
                                unsigned int(1) interpolate;
                                unsigned int(3) missing_sample_processing;
                                unsigned int(6) reserved;
}
```

Table 22

```
class VerticalTargetAlignmentAxisSampleEntry() extends MetaDataSampleEntry ('vtax') {
                                unsigned int(1) interpolate;
                                unsigned int(3) missing_sample_processing;
                                unsigned int(6) reserved;
}
```

wherein *missing_sample_processing* indicates a processing mode in order to derive an associated target alignment axis sample for a video sample which does not overlap with a target alignment axis sample.

In a variant, a processing mode may be selected in Table 23.

Table 23

| Value | Processing mode |
|---|---|
| 0 | No target alignment axis signaled. |
| 1 | When present, the previous sample is to be used. Otherwise, no target alignment axis signaled. |
| 2 | Linear interpolation between previous and next sample when present. When the previous or the next sample is not defined, no target alignment axis signaled. |
| 3 | Application specific, that is the alignment process may be provided by external means. |
| 4..7 | reserved |

Any sample entry previously presented may be modified according to the above signalling.

In some use cases, it may be advantageous to define metadata sample containing target alignment axis data with a duration smaller than video track samples. This can be the case for instance when the metadata track has been defined for the highest video sampling rate, e.g. 60 Hz, and a second video version at 30Hz was produced. In this use case, illustrated in **Figure 36,** instead of transforming the metadata track to a 30Hz sampling rate, one may simply reuse the track as is.

No necessary new signalling is needed to enable this use case, but it can be useful and practical for applications implementing the present invention to work with such sampling rates.

Exemplary embodiments and variants of the signalling methods illustrated in **Figures 31-36** are at the media encapsulation level.

In one alternative exemplary embodiment, target alignment axis data is signalled in a Supplementary Enhances Information (SEI) message as defined in VVC (ISO/IEC 23090-3 Versatile Video Coding, ITU-T Recommendation H.266, https://www.itu.int/rec/T-REC-H.266-202008-I/en) in a video bitstream comprising encoded video data.

Other SEI message may be used, for example SEI message defined in HEVC (ISO/IEC 23008-2 High Efficiency Video Coding, ITU-T Recommendation H.265, https://www.itu.int/rec/T-REC-H.265-202108-P/en), AVC (ISO/IEC 14496-10 Advanced Video Coding for generic audio-visual services, ITU-T Recommendation H.264, https://www.itu.int/rec/T-REC-H.264-202108-P/en) or EVC ( ISO/IEC 23094-1 Essential video coding).

Implementing this exemplary embodiment requires definition a new SEI message type and registration of said new message type as a possible type of SEI message.

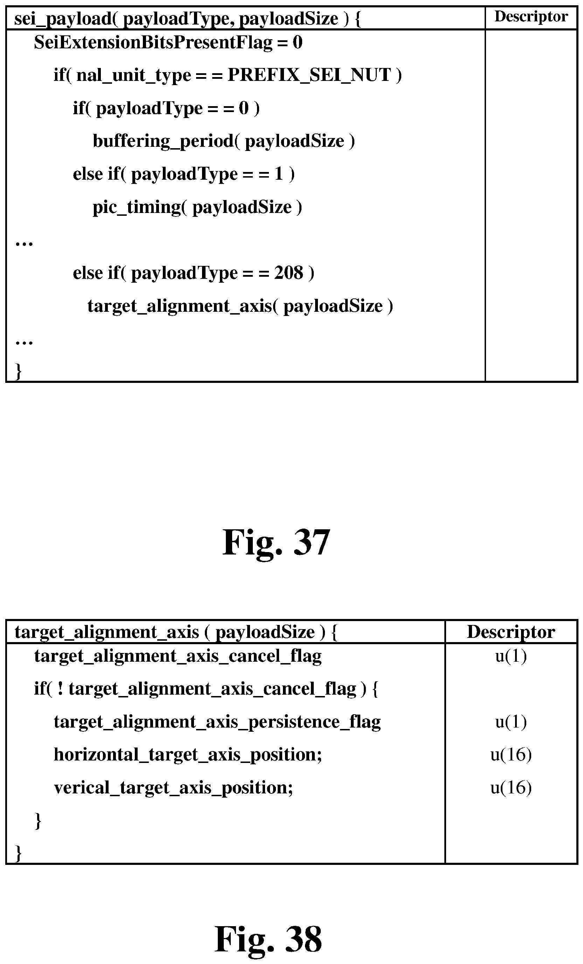

For defining a new SEI message type, the SEI payload as defined in VVC is modified as illustrated in **Figure 37** in which a *target_alignment_axis* payload syntax element is defined in **Figure 38** in which:

- *target_alignment_axis_cancel_flag* equal to 1 indicates that the SEI message cancels the persistence of any previous target alignment axis SEI message in output order. *target_alignment_axis_cancel_flag* equal to 0 indicates that target alignment axis data follows;

- *target_alignment_axis_persistence_flag* specifies the persistence of a target alignment axis SEI message for a current layer (set of images);

- *target_alignment_axis_persistence_flag* equal to 0 specifies that a target alignment axis SEI message applies to a current decoded image only;

- *target_alignment_axis_persistence_flag* equal to 1 specifies that the target alignment axis SEI message applies to a current image and persists for all subsequent images of a current layer in output order until one or more of the following conditions are true:

  ○ a new CLVS (coded layer-wise video sequence) of the current layer begins;

  ○ the bitstream ends;

  ○ an image in a current layer in an AU (Access Unit) associated with a target alignment axis SEI message is output that follows a current image in output order.

- *horizontal_target_axis_position* is a 0.16 fixed-point number which corresponds to a normalized location of a target alignment axis on the vertical dimension for the cropped regions based on the images associated with this SEI message. This number is comprised between 0.0 and 1.0.

- *vertical_target_axis_position* is a 0.16 fixed-point number which corresponds to a normalized location of a target alignment axis on the horizontal dimension for the cropped regions based on the images associated with this SEI message. This number is comprised between 0.0 and 1.0.

Note CVLS is a sequence of pictures and the associated non-VCL NAL units of the base layer of a coded video sequence (CVS). AU is a set of NAL units that are associated with each other according to a specified classification rule, are consecutive in decoding order, and contain exactly one coded picture with nuh_layer_id equal to 0. In addition to containing the video coding layer (VCL) NAL units of the coded picture with nuh_layer_id equal to 0, an access unit may also contain non-VCL NAL units. The decoding of an access unit with the decoding process always results in a decoded picture with nuh_layer_id equal to 0.

Similarly to the signalling methods illustrated in **Figures 31-36,** signalling target alignment axis data in a SEI message may implement different variations such as splitting vertical and horizontal in different SEI messages, enabling interpolation between different SEI messages and different interpolation modes, handling of missing SEI message for certain video frames, etc... For brevity's sake, those variations are not represented here.

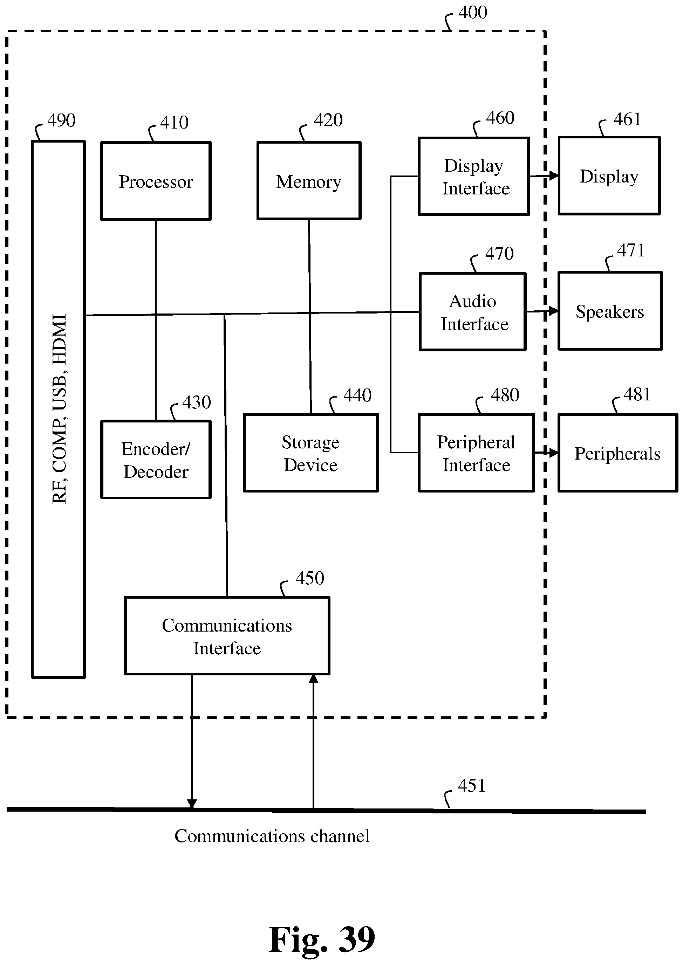

**Figure 39** shows a schematic block diagram illustrating an example of a system 400 in which various aspects and exemplary embodiments are implemented.

System 400 may be embedded as one or more devices including the various components described below. In various exemplary embodiments, system 400 may be configured to implement one or more of the aspects described in the present application.

Examples of equipment that may form all or part of the system 400 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 400, singly or in combination, may be embodied in a single integrated circuit (IC), multiple ICs, and/or discrete components. For example, in at least one exemplary embodiment, the processing and encoder/decoder elements of system 400 may be distributed across multiple ICs and/or discrete components. In various exemplary embodiments, system 400 may be communicatively coupled to other similar systems, or to other electronic devices, via, for example, a communications bus or through dedicated input and/or output ports.

System 400 may include at least one processor 410 configured to execute instructions loaded therein for implementing, for example, the various aspects described in the present application. Processor 410 may include embedded memory, input output interface, and various other circuitries as known in the art. System 400 may include at least one memory 420 (for example a volatile memory device and/or a non-volatile memory device). System 400 may include a storage device 440, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 440 may include an internal storage device, an attached storage device, and/or a network accessible storage device, as non-limiting examples.

System 400 may include an encoder/decoder module 430 configured, for example, to process data to provide encoded/decoded video picture data, and the encoder/decoder module 430 may include its own processor and memory. The encoder/decoder module 430 may represent module(s) that may be included in a device to perform the encoding and/or decoding functions. As is known, a device may include one or both encoding and decoding modules.

Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in the present application may be stored in storage device 440 and subsequently loaded onto memory 420 for execution by processor 410. In accordance with various exemplary embodiments, one or more of processor 410, memory 420, storage device 440, and encoder/decoder module 430 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 410 and/or the encoder/decoder module 430 may be used to store instructions and to provide working memory for processing that may be performed during encoding or decoding.

In other exemplary embodiments, however, a memory external to the processing device (for example, the processing device may be either the processor 410 or the encoder/decoder module 430) may be used for one or more of these functions. The external memory may be the memory 420 and/or the storage device 440, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 400 may be provided through various input devices as indicated in block 490. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present application is implemented in the automotive domain.

In various exemplary embodiments, the input devices of block 490 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream may be provided to various processing elements, including, for example, processor 410, and encoder/decoder 430 operating in combination with the memory and storage elements to process the data stream as necessary for presentation on an output device.

Various elements of system 400 may be provided within an integrated housing. Within the integrated housing, the various elements may be interconnected and transmit data therebetween using suitable connection arrangement 490, for example, an internal bus as known in the art, including the I2C bus, wiring, and printed circuit boards.

The system 400 may include communication interface 450 that enables communication with other devices via communication channel 451. The communication interface 450 may include, but is not limited to, a transceiver configured to transmit and to receive data over communication channel 451. The communication interface 450 may include, but is not limited to, a modem or network card and the communication channel 451 may be implemented, for example, within a wired and/or a wireless medium.

Data may be streamed to system 400, in various exemplary embodiments, using a Wi-Fi network such as IEEE 802.11. The Wi-Fi signal of these exemplary embodiments may be received over the communications channel 451 and the communications interface 450 which are adapted for Wi-Fi communications. The communications channel 451 of these exemplary embodiments may be typically connected to an access point or router that provides access to outside networks including the Internet for allowing streaming applications and other over-the-top communications.

Other exemplary embodiments may provide streamed data to the system 400 using a set-top box that delivers the data over the HDMI connection of the input block '90.

Still other exemplary embodiments may provide streamed data to the system 400 using the RF connection of the input block 490.

The streamed data may be used as a way for signaling information used by the system 400. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 400 may provide an output signal to various output devices, including a display 461, speakers 471, and other peripheral devices 481. The other peripheral devices 481 may include, in various examples of exemplary embodiments, one or more of a stand-alone DVR, a disk player, a stereo system, a lighting system, and other devices that provide a function based on the output of system 400.

In various exemplary embodiments, control signals may be communicated between the system '00 and the display 461, speakers 471, or other peripheral devices 481 using signaling such as AV.Link (Audio/Video Link), CEC (Consumer Electronics Control), or other communications protocols that enable device-to-device control with or without user intervention.

The output devices may be communicatively coupled to system 400 via dedicated connections through respective interfaces 460, 470, and 480.

Alternatively, the output devices may be connected to system 400 using the communications channel 451 via the communications interface 450. The display 461 and speakers 471 may be integrated in a single unit with the other components of system 400 in an electronic device such as, for example, a television.

In various exemplary embodiments, the display interface 460 may include a display driver, such as, for example, a timing controller (T Con) chip.

The display 461 and speaker 471 may alternatively be separate from one or more of the other components, for example, if the RF portion of input 490 is part of a separate set-top box. In various exemplary embodiments in which the display 461 and speakers 471 may be external components, the output signal may be provided via dedicated output connections, including, for example, HDMI ports, USB ports, or COMP outputs.

In **Figures 1-39,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 440 **(Figure 39)** for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 410 or by hardware, or by a combination of hardware and software. As a non-limiting example, the exemplary embodiments may be also implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present application, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method (100) of signaling encapsulated data representing image data of an image, the method comprising :

    - writing (110) image data of an image as encapsulated data; and
    - writing (130) alignment axis data, representing at least one target alignment axis of the image, as encapsulated data, each target alignment axis indicating a vertical or horizontal axis of the image intended to be used by a media player to display the image once said image has been aligned in such a way that a distance between a horizontal or vertical axis of a displaying surface and said target alignment axis is minimized in the limit of displaying the aligned image over the full displaying surface.

2. A method (200) of parsing encapsulated data representing image data of an image, the method comprising :

    - obtaining (210) image data of an image by parsing encapsulated data; and
    - obtaining (230) at least one target alignment axis of the image by parsing encapsulated data, each target alignment axis indicating a vertical or horizontal axis of the image intended to be used by a media player to display the image once said image has been aligned in such a way that a distance between a horizontal or vertical axis of a displaying surface and said target alignment axis is minimized in the limit of displaying the aligned image over the full displaying surface.

3. A method (300) of displaying image data of an image on a displaying surface, the method comprising :

    - determining (320) whether the aspect ratio of the image matches the aspect ratio of the displaying surface;
    - if the aspect ratio of the image does not match the aspect ratio of the displaying surface,
    - determining (330) whether displaying the image on the displaying surface causes at least one part of the image to go beyond the displaying surface boundaries in either horizontal or vertical direction;
    - if displaying the image on the displaying surface causes at least one part of the image to go beyond the displaying surface boundaries in horizontal direction,

        - obtaining (340) a vertical target alignment axis of the image from encapsulated data;
        - obtaining (350) a cropped region of the image once said image has been aligned in such a way that a distance between a vertical axis of the displaying surface and the vertical target alignment axis is minimized in the limit of displaying the aligned image over the full displaying surface;

    - if the displaying the image on the displaying surface causes at least one part of the image to go beyond the displaying surface boundaries in vertical direction,

        - obtaining (360) a horizontal target alignment axis of the image from encapsulated data;
        - obtaining (370) a cropped region of the image once said image has been aligned in such a way that a distance between a horizontal axis of a displaying surface and the horizontal target alignment axis is minimized in the limit of displaying the aligned image over the full displaying surface;

    - displaying (380) the cropped region of the aligned image on the displaying surface.

4. The method of one of claims 1 to 3, wherein a distance between an axis of the displaying surface and a target alignment axis is minimized when said distance is below a threshold .

5. The method of one of previous claims, wherein a video comprising multiple video frames, image data representing each video frame, and wherein at least one target alignment axis of the video are signaled according to the method of claim 1, parsing encapsulated data representing image data of each video frame and at least one target alignment axis of the video are parsed according to the method of claim 2, image data of each video frame is displayed on the displaying surface according to the method of claim 3 or 4.

6. The method of claim 5, wherein at least one target alignment axis is defined for each video frame.

7. The method of claim 5, wherein at least one target alignment axis is defined for a group of video frames.

8. The method of one of previous claims, wherein multiple target alignment axes are defined according to certain aspect ratios of different displaying surfaces, one target alignment axis per aspect ratio.

9. The method of one of previous claims, wherein at least one target alignment axis definition varies over time or changes on a video frame or group of video frames basis.

10. A container formatted to include encapsulated data obtained from a method of one of claims 1, 5 to 9.

11. The container of claim 11,wherein the container is a binary file, or a supplementary enhanced information message.

12. The container of claim 12, wherein the container is a ISOBMFF formatted file that conforms to the standard ISO/IEC 14496-12 or one of its derivatives.

13. An apparatus comprises means for performing one of the method claimed in any one of claims 1 to 9.

14. A computer program product including instructions which, when the program is executed by one or more processors, causes the one or more processors to carry out a method claimed in any one of claims 1 to 9.

15. A non-transitory storage medium carrying instructions of program code for executing a method claimed in any one of claims 1 to 9.

**Fig. 1**

Fig. 2

**Fig. 3**

EP 4 376 426 A1

Fig. 4

33

Fig. 5

Fig. 6

Fig. 7

**Fig. 8**

**Fig. 9**

**Fig. 10**

**Fig. 11**

110

100

no

120

yes

130

**Fig. 12**

210

200

no

220

yes

230

**Fig. 13**

**Fig. 14**

**Fig. 15**

**Fig. 16**

**Fig. 17**

Fig. 18

Fig. 19

Fig. 20

**Fig. 21**

**Fig. 22**

...

**Fig. 23**

...

**Fig. 24**

...

**Fig. 25**

...

**Fig. 26**

...                                                                    ...

**Fig. 27**

...                                                                    ...

**Fig. 28**

n                                              n+1

# Fig. 29

# Fig. 30

File

| trak { #1 \| video \| hev1 } | mdat |
|---|---|

| trak { #2 \| meta \| tref=1, type=cdsc \| taax   } | mdat |
|---|---|

# Fig. 31

File

trak { #1 | video | hev1 }   mdat

trak { #2 | meta | tref=1, type=cdsc | htax }   mdat

trak { #3 | meta | tref=1, type=cdsc | vtax }   mdat

# Fig. 32

Video samples

| n | n+1 | n+2 | n+3 | n+4 | n+5 | n+6 | n+7 | n+8 | n+9 | n+10 |
|---|---|---|---|---|---|---|---|---|---|---|

| m | m+1 | m+2 | m+3 | m+4 | m+5 | m+6 | m+7 | m+8 | m+9 | m+10 |
|---|---|---|---|---|---|---|---|---|---|---|

Alignment axis samples

media timeline

# Fig. 33

Video samples

| n | n+1 | n+2 | n+3 | n+4 | n+5 | n+6 | n+7 | n+8 | n+9 | n+10 |
|---|---|---|---|---|---|---|---|---|---|---|

| m | m+1 | m+2 | m+3 | m+4 |
|---|---|---|---|---|

Alignment axis samples

media timeline

# Fig. 34

Video samples

| n | n+1 | n+2 | n+3 | n+4 | n+5 | n+6 | n+7 | n+8 | n+9 | n+10 |
|---|-----|-----|-----|-----|-----|-----|-----|-----|-----|------|

| m | m+1 | m+2 | m+3 | m+4 |
|---|-----|-----|-----|-----|

Alignment axis samples

media timeline

# Fig. 35

Video samples

| n | n+1 | n+2 | n+3 | n+4 | n+5 | n+6 | n+7 | n+8 | n+9 | n+10 |
|---|-----|-----|-----|-----|-----|-----|-----|-----|-----|------|

| m | m+1 | m+2 | m+3 | m+4 | m+5 | m+6 | m+7 | m+8 | m+9 | m+10 | m+11 | m+12 | m+13 | m+14 | m+15 | m+16 | m+17 | m+18 | m+19 | m+20 |
|---|-----|-----|-----|-----|-----|-----|-----|-----|-----|------|------|------|------|------|------|------|------|------|------|------|

Alignment axis samples

media timeline

# Fig. 36

| sei_payload( payloadType, payloadSize ) { | Descriptor |
|---|---|
|   SeiExtensionBitsPresentFlag = 0 | |
|     if( nal_unit_type = = PREFIX_SEI_NUT ) | |
|       if( payloadType = = 0 ) | |
|         buffering_period( payloadSize ) | |
|       else if( payloadType = = 1 ) | |
|         pic_timing( payloadSize ) | |
| ... | |
|       else if( payloadType = = 208 ) | |
|         target_alignment_axis( payloadSize ) | |
| ... | |
| } | |

# Fig. 37

| target_alignment_axis ( payloadSize ) { | Descriptor |
|---|---|
|   target_alignment_axis_cancel_flag | u(1) |
|   if( ! target_alignment_axis_cancel_flag ) { | |
|     target_alignment_axis_persistence_flag | u(1) |
|     horizontal_target_axis_position; | u(16) |
|     verical_target_axis_position; | u(16) |
|   } | |
| } | |

# Fig. 38

400

490

410 Processor

420 Memory

460 Display Interface

461 Display

RF, COMP, USB, HDMI

470 Audio Interface

471 Speakers

430 Encoder/ Decoder

440 Storage Device

480 Peripheral Interface

481 Peripherals

450 Communications Interface

451

Communications channel

**Fig. 39**

Europäisches
Patentamt

European
Patent Office

Office européen
des brevets

# EUROPEAN SEARCH REPORT

**Application Number**

EP 22 30 6739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/252697 A1 (DOLBY LABORATORIES LICENSING CORP [US]) 16 December 2021 (2021-12-16) * abstract * * paragraph [0002] * * paragraph [0006] – paragraph [0009] * * paragraph [0029] – paragraph [0031] * * paragraph [0034] – paragraph [0035] * * paragraph [0040] * * paragraph [0056] * * figures 2A,2B * ----- | 1-15 | INV. H04N21/854 H04N21/84 H04N21/414 H04N21/4402 H04N21/236 |
| Y | US 2013/113996 A1 (ZHU LIHUA [US] ET AL) 9 May 2013 (2013-05-09) * abstract * * paragraph [0004] – paragraph [0005] * * paragraph [0016] – paragraph [0017] * * paragraph [0020] – paragraph [0024] * * paragraph [0045] – paragraph [0062] * * paragraph [0064] * * figures 1,2,5 * ----- | 1-15 | |
| A | KIESS JOHANNES J KIESS@GMX DE ET AL: "A Survey on Content-Aware Image and Video Retargeting", ACM TRANSACTIONS ON MULTIMEDIA COMPUTING COMMUNICATIONS ANDAPPLICATIONS, ASSOCIATION FOR COMPUTING MACHINERY, US, vol. 14, no. 3, 24 July 2018 (2018-07-24), pages 1-28, XP058687452, ISSN: 1551-6857, DOI: 10.1145/3231598 * abstract * * page 1 – page 2 * * page 4 * * page 6 – page 7 * * page 14 * * page 18 * * figures 2,3,15 * ----- -/-- | 1-15 | TECHNICAL FIELDS SEARCHED (IPC) H04N |

The present search report has been drawn up for all claims

| Place of search | Date of completion of the search | Examiner |
|---|---|---|
| The Hague | 24 February 2023 | Fantini, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/125582 A1 (KAST ANTON [US] ET AL) 29 April 2021 (2021-04-29) * abstract * * paragraph [0002] * * paragraph [0061] – paragraph [0066] * * paragraph [0070] – paragraph [0071] * * figure 6 * ----- | 1-15 | |
| A | US 2021/248750 A1 (DIMSON THOMAS FREDERICK [US] ET AL) 12 August 2021 (2021-08-12) * abstract * * paragraph [0025] – paragraph [0026] * * paragraph [0031] – paragraph [0032] * * paragraph [0043] – paragraph [0046] * * figures 4A,4B,5 * ----- | 1-15 | |
| A | BOYCE J ET AL: "Spherical viewport SEI for HEVC and AVC 360 video", 26. JCT-VC MEETING; 12-1-2017 – 20-1-2017; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Z0034, 5 January 2017 (2017-01-05), XP030118141, * abstract * * page 1 – page 3 * ----- | 1-15 | TECHNICAL FIELDS SEARCHED (IPC) |

The present search report has been drawn up for all claims

| Place of search | Date of completion of the search | Examiner |
|---|---|---|
| The Hague | 24 February 2023 | Fantini, Federico |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 22 30 6739

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2023

| Patent document cited in search report | | Publication date | Patent family member(s) | | Publication date |
|---|---|---|---|---|---|
| WO 2021252697 | A1 | 16-12-2021 | NONE | | |
| US 2013113996 | A1 | 09-05-2013 | CN | 103004221 A | 27-03-2013 |
| | | | EP | 2594070 A1 | 22-05-2013 |
| | | | JP | 2013538482 A | 10-10-2013 |
| | | | KR | 20130127423 A | 22-11-2013 |
| | | | US | 2013113996 A1 | 09-05-2013 |
| | | | WO | 2012009245 A1 | 19-01-2012 |
| US 2021125582 | A1 | 29-04-2021 | CN | 109690471 A | 26-04-2019 |
| | | | EP | 3482286 A1 | 15-05-2019 |
| | | | US | 2019266980 A1 | 29-08-2019 |
| | | | US | 2021125582 A1 | 29-04-2021 |
| | | | WO | 2018093372 A1 | 24-05-2018 |
| | | | WO | 2018094052 A1 | 24-05-2018 |
| US 2021248750 | A1 | 12-08-2021 | US | 10929979 B1 | 23-02-2021 |
| | | | US | 2021248750 A1 | 12-08-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 11322117 B2, Kast